# EUROPÄISCHE PATENTSCHRIFT

(11) **EP 2 261 676 B1**
(45) Veröffentlichungstag und Bekanntmachung des Hinweises auf die Patenterteilung: **21.01.2015**
(21) Anmeldenummer: 09405100.0
(22) Anmeldetag: 12.06.2009
(51) Int. Cl.: G01N 35/10, G01N 30/24, G01N 35/00

(54) **Werkzeug zur Handhabung einer Probe**
Tool for handling a sample
Outil de manipulation d'un échantillon

(43) Veröffentlichungstag der Anmeldung: 15.12.2010
(73) Patentinhaber: CTC Analytics AG, 4222 Zwingen (CH)
(72) Erfinder: Hillbrand, Roland, 4800 Zofingen (CH)
(74) Vertreter: Rüfenacht, Philipp Michael

(56) Entgegenhaltungen:
- EP-A- 1 798 551
- EP-A1- 1 291 658
- WO-A-2007/032039
- CN-Y- 201 170 097
- DE-A1-102005 049 920
- DE-C1- 10 219 790
- DE-U1-202007 014 286
- US-A- 4 621 534
- US-A- 5 756 905
- US-A1- 2003 075 328
- US-A1- 2004 047 765
- US-A1- 2007 140 904

## Beschreibung

### Technisches Gebiet

Die Erfindung betrifft ein Werkzeug zur Handhabung einer Probe, mit einer Befestigungsvorrichtung zum lösbaren Befestigen des Werkzeugs an einer Werkzeughalterung einer Probenhandhabungseinrichtung und einer an der Befestigungsvorrichtung befestigten Probenmanipuliervorrichtung. Weiter betrifft die Erfindung eine entsprechende Werkzeughalterung, eine Probenhandhabungseinrichtung mit einer solchen Werkzeughalterung sowie eine Anordnung mit einer solchen Probenhandhabungseinrichtung und wenigstens einem entsprechenden Werkzeug. Zudem betrifft die Erfindung ein Verfahren zum An- bzw. Abkoppeln eines solchen Werkzeugs an eine solche bzw. von einer solchen Werkzeughalterung.

### Stand der Technik

Die Anforderungen bei der Analyse von Materialproben, beispielsweise bei der Gas- oder Flüssigkeitschromatographie, werden ständig höher. Einerseits werden beispielsweise die Probenmengen immer geringer, wobei gleichzeitig die Empfindlichkeit gesteigert werden soll. Auch die Anzahl der durchzuführenden Analysen soll ständig erhöht werden.

Für die weitgehend automatische Analyse von Proben sind sogenannte Autosampler bekannt, welche die Handhabung einer Probe übernehmen, bevor sie dem Analysegerät in geeigneter Form und Dosierung zugeführt wird. Die Handhabung der Probe erfolgt mit verschiedenen Werkzeugen, beispielsweise verschiedenen Arten von Spritzen für die Aufnahme der Probe aus einem Vorratsbehälter und die Abgabe der Probe in ein Analysegerät. Diese Werkzeuge werden an einem solchen Gerät befestigt, müssen typischerweise jedoch manuell ausgewechselt werden.

Aus der DE 102 19 790 C1 von Gerstel ist eine weitere derartige Vorrichtung bekannt, welche jedoch das automatische Wechseln solcher Werkzeuge ermöglicht. Das Werkzeug umfasst eine an einem Halter (17) befestigte Spritze (16) mit Nadel (29) und einem Kopf (49) zum Bewegen des Spritzenkolbens. Dieser Halter (17) ist in eine Aufnahme (6) eingehängt. Mit einem beweglich an der Vorrichtung befestigen Aufnahmearm (4) wird der Halter (17) samt Spritze (16) magnetisch gegriffen (Magnete 21 und Blechstreifen 19), indem der Aufnahmearm (4) horizontal an die Aufnahme (6) herangefahren wird, wobei die vorne geschlitzten Nadelführungsaufnahmen (30, 32) über die Nadel (29) und der Betätiger (11) über den Kopf (49) gefahren werden. Dann wird das Werkzeug in der Aufnahme (6) vertikal angehoben, sodass der Halter (17) aus der horizontalen Arretierung (42) gelöst wird und gleichzeitig die Nadelführungsaufnahmen (30, 32) die Nadelführungen (36) in sich aufnehmen. Schliesslich wird das Werkzeug horizontal ausgefahren. Um das Werkzeug abzulegen wird umgekehrt verfahren. Der Aufnahmearm (4) wird horizontal über der Aufnahme (6) positioniert und danach vertikal abgesenkt, sodass der Halter (17) in der Arretierung (42) horizontal arretiert wird und gleichzeitig die Nadelführungsaufnahmen (30, 32) die Nadelführungen (36) freigeben. Danach wird das Werkzeug wiederum horizontal weggefahren, wobei es entgegen der Haltekraft der Magnete (21) einfach vom Aufnahmearm (4) losgerissen wird.

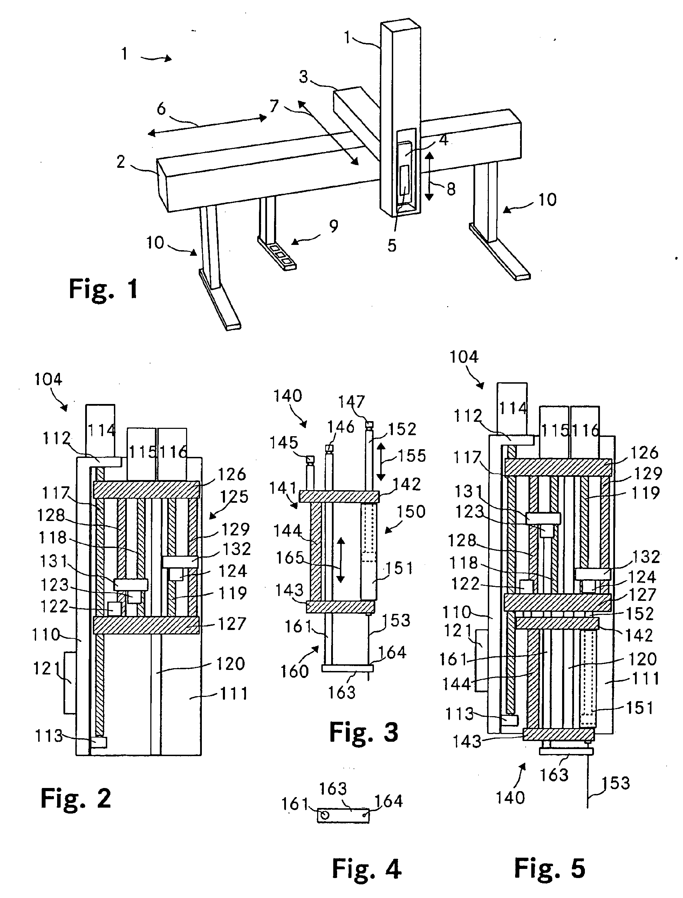

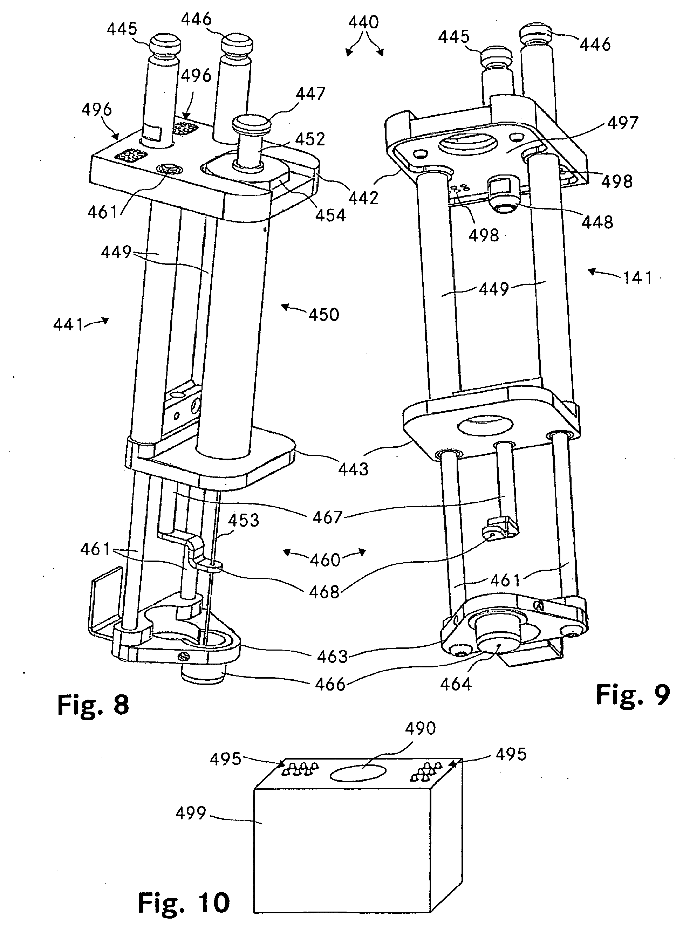

Diese Vorrichtung ermöglicht zwar das automatische Wechseln von Werkzeugen, hat allerdings den Nachteil, dass die An- und Abkopplung des Werkzeugs aufwändig ist, da hierfür mehrere sequentielle Bewegungen in verschiedenen Richtungen notwendig sind, wobei die Bewegungsrichtung der Werkzeughalterung mehrmals zwischen horizontal und vertikal gewechselt werden muss. Zudem kann die Vorrichtung nicht flexibel eingesetzt werden, da eine bestimmte Vorrichtung (wie beispielsweise jene gemäss Fig. 5) auch nur für eine bestimmte Art von Werkzeugen (hier: Spritzen) geeignet ist. D. h. für jede Art von Werkzeug muss der Aufnahmearm in einer bestimmten Art und Weise ausgebildet sein, wie dies beispielsweise aus den verschiedenen Ausführungen gemäss den Figuren 5 und 9 hervorgeht. Durch die filigrane Konstruktion der separaten Halterungen bzw. Führungen für den Kopf sowie die Nadel der Spritze ist das Werkzeug zudem vergleichsweise anfällig auf Defekte. Bereits die beim Aufnehmen bzw. Ablegen des Werkzeugs wirkenden magnetischen Kräfte oder schon rel ativ geringe Ungenauigkeiten beim Verfahren des Aufnahmearms zur Aufnahme oder Ablage des Werkzeugs können zu einer Beschädigung desselben führen.

US 2004/0047765 offenbart einen automatisierten Laborarbeitsplatz mit einem Roboterarm als Werkzeug, einer "nut" als Befestigungsvorrichtung sowie einer "pneumatically extensible section" als Haltevorrichtung, die in z-Richtung verfahrbar an der Befestigungsvorrichtung befestigt und in dieser Richtung an die Werkzeughalterung (der "y-carriage") an- bzw. von dieser abkoppelbar ist.

US 5,756,905 offenbart einen "needle guide" eines automatischen Injektionsgeräts als Haltevorrichtung.

US 4,621,534 offenbart einen "automatic sampling apparatus" ohne nähere Angaben zur Kopplungsrichtung einer Spritze.

WO 2007/032039 offenbart einen "automatic solid phase microextraction (SPME) sampling apparatus" mit zwei Kopplungsrichtungen für einen Probennehmer.

US 2007/0140904 offenbart eine "sampling station" mit einer "syringe needle" als Werkzeug. Auch hier wird keine nähere Angabe zur Kopplungsrichtung gemacht.

EP 1 798 551 offenbart einen Probennehmer, in dem ein Probenrohr in ein Aufnahmerohr eingesetzt wird.

EP 1 291 658 offenbart einen "automated robot" als Autosampler, bei dem ein "head apparatus" als Werkzeug, einem "head apparatus" als Befestigungsvorrichtung und einem "cylinder" als Haltevorrichtung, die mitsamt dem Werkzeug an dem "robot" als Werkzeughalterung an- bzw. von diesem abkoppelbar ist.

DE 10 2005 049 920 offenbart eine Roboteranordnung mit einer in einer Richtung (der "Y-Richtung") bewegbaren Ankoppeleinrichtung zum Ankoppeln eines Arbeitsmoduls.

DE 20 2007 014 286 U1 offenbart eine Dosiereinrichtung für Flüssigkeiten mit bajonettartigen Verbindungselementen.

### Darstellung der Erfindung

Aufgabe der Erfindung ist es, ein dem eingangs genannten technischen Gebiet zugehörendes Werkzeug zu schaffen, welches eine einfache Möglichkeit zum automatischen Wechseln einer Vielzahl verschiedener Werkzeuge einer Probenhandhabungseinrichtung bietet. Zudem soll eine entsprechende Probenhandhabungseinrichtung mit zugehöriger Werkzeughalterung, eine komplette Probenhandhabungsanordnung sowie entsprechende Verfahren zum An- bzw. Abkoppeln eines Werkzeugs an die bzw. von der Werkzeughalterung geschaffen werden.

Die Lösung der Aufgabe ist durch die Merkmale des Anspruchs 1 definiert. Das Werkzeug zur Handhabung einer Probe umfasst eine Befestigungsvorrichtung zum lösbaren Befestigen des Werkzeugs an einer Werkzeughalterung einer Probenhandhabungseinrichtung sowie eine an der Befestigungsvorrichtung befestigte Probenmanipuliervorrichtung. Gemäss

der Erfindung umfasst das Werkzeug weiter eine Haltevorrichtung. Diese ist einerseits verfahrbar an der Befestigungsvorrichtung befestigt und andererseits an die Werkzeughalterung an- und natürlich auch von dieser abkoppelbar. Die Haltevorrichtung ist hierbei in derselben Richtung an die Werkzeughalterung an- und von dieser abkoppelbar, in welcher sie an der Befestigungsvorrichtung verfahrbar ist. Diese Richtung wird nachfolgend als Kopplungsrichtung bezeichnet.

Mit anderen Worten: Die Haltevorrichtung, welche in etwa den bei Gerstel vorhandenen Stangen (34 bzw. 31) entspricht, ist als Teil des Werkzeugs ausgebildet und nicht wie bei Gerstel als Teil des Aufnahmearms, d. h. als Teil der Werkzeugaufnahme der Probenhandhabungseinrichtung. Bei der Erfindung wird die Haltevorrichtung folglich zusammen mit dem Werkzeug ausgewechselt, wohingegen beim Stand der Technik die Stangen (34 bzw. 31) am Aufnahmearm (4) verbleiben, wenn das Werkzeug gewechselt wird.

Die Probenhandhabungseinrichtung ist häufig derart ausgebildet, dass sie eine Schlittenführung umfasst, längs welcher ein Schlitten horizontal verfahrbar ist. Der Schlitten ist beispielsweise nur entlang der Schlittenführung, d. h. in einer Richtung horizontal verfahrbar. Typischerweise ist der Schlitten jedoch auch senkrecht zur Schlittenführung horizontal verfahrbar und wird in diesem Fall als Kreuzschlitten bezeichnet. Weiter ist an einem Ende des Schlittens senkrecht verfahrbar eine Werkzeughalterung befestigt, welche als Teil des Schlittens ausgebildet oder an diesem befestigt ist. Durch horizontales Verfahren des Schlittens auf der Schlittenführung sowie vertikales Verfahren der Werkzeughalterung am Schlitten kann mit dem Werkzeug praktisch jeder Punkt innerhalb eines bestimmten Bereichs angefahren werden.

Die Haltevorrichtung kann, wie weiter unten ausgeführt wird, verschiedenste Aufgaben und Funktionen übernehmen. Indem die Haltevorrichtung nun als Teil des Werkzeugs ausgebildet ist und zusammen mit diesem ausgewechselt wird, kann die Haltevorrichtung spezifisch und präzise an die jeweilige/n Funktion/en des Werkzeugs angepasst werden. Zusätzlich zur Schnittstelle zum Befestigen der Befestigungsvorrichtung an der Werkzeughalterung ist eine weitere Schnittstelle für die Befestigung der Haltevorrichtung an der Werkzeughalterung vorhanden. Jedes Werkzeug mit einer Befestigungsvorrichtung, welche diese beiden Schnittstellen umfasst, kann folglich an eine entsprechende Werkzeughalterung angekoppelt werden. Selbstverständlich kann auch ein Werkzeug, welches lediglich eine dieser beiden Schnittstellen umfasst, an eine solche Werkzeughalterung angekoppelt werden. Je nach Art der gewünschten Probenhandhabung reicht beispielsweise die Ankopplung des Werkzeugs mit dessen Befestigungsvorrichtung an die Werkzeughalterung ohne die Ankopplung einer Haltevorrichtung.

Da das Ankoppeln der Haltevorrichtung an die Werkzeughalterung in derselben Richtung erfolgt, wie die Haltevorrichtung an der Werkzeughalterung befestigbar ist, ergibt sich insgesamt eine deutlich einfachere Konstruktion des Werkzeugs, da die Haltevorrichtung in lediglich einer Richtung verfahren werden können muss. Daraus ergibt sich auch ein äusserst einfacher Ankopplungsvorgang der Haltevorrichtung an der Werkzeughalterung mit Bewegungen in ausschliesslich einer Bewegungsrichtung, nämlich dieser Kopplungsrichtung.

Zur Klarstellung sei hier noch erwähnt, dass bei einem Element, das in einer bestimmten Richtung bewegbar ist, im Rahmen der vorliegenden Beschreibung nicht nur eine Bewegung in genau dieser einen Raumrichtung, sondern auch in der jeweiligen Gegenrichtung gemeint ist. Wenn also beispielsweise die Haltevorrichtung in der Kopplungsrichtung an der Befestigungsvorrichtung verfahrbar ist, heisst das, dass sie in der Kopplungsrichtung und in der entsprechenden Gegenrichtung, d. h. in der Kopplungsrichtung sowohl vorwärts, als auch rückwärts verfahrbar ist.

Da die Haltevorrichtung bereits in das Werkzeug integriert ist und nicht wie bei Gerstel aufwändig mit diesem gekoppelt werden muss, kann die gesamte Konstruktion zudem einfach und robust ausgeführt werden, was wiederum die Defekt-Anfälligkeit deutlich reduziert. Hierzu trägt auch bei, dass beispielsweise bei einem Werkzeug, das für die Handhabung der Probe eine Spritze umfasst, die Nadel nicht wie beim Stand der Technik aufwändig in eine Nadelführung ein- bzw. daraus ausgefädelt werden muss, sondern die Nadel einer Spritze beim Aufnehmen bzw. Ablegen des Werkzeugs in der Haltevorrichtung, welche auch zur Führung der Nadel verwendet werden kann, verbleibt.

Die Haltevorrichtung kann mehrere Funktionen erfüllen. Sie dient beispielsweise zur Führung eines Elements der Probenmanipuliervorrichtung, wenn die Haltevorrichtung in der Kopplungsrichtung relativ zur Befestigungsvorrichtung verfahren wird.

Sie kann auch dazu dienen, einen Probenbehälter zu halten, wenn dieser mit Hilfe des Werkzeugs transportiert werden soll. Sie kann auch als Niederhalter dienen, um bei der Aufnahme oder der Abgabe einer Probe den entsprechenden Behälter in Position zu halten, beispielsweise den Probenbehälter zu halten (oder zurück zu halten), wenn mit der Nadel einer Spritze das Septum eines Glasfläschchens durchstochen oder die Nadel aus dem Septum herausgezogen wird.

Die Haltevorrichtung kann auch als Transportvorrichtung dienen, beispielsweise für den Transport von Probenbehältnissen. Es gibt z. B. Probenfläschchen mit magnetischen Elementen, so dass diese mittels entsprechender Magnete an der Haltevorrichtung gegriffen und transportiert werden können.

An der Haltevorrichtung kann auch eine Vorrichtung zum Öffnen von Behältnissen für Proben oder Zubehör vorgesehen sein. Beispielsweise ein Magnet zum Öffnen von Schubladen eines Schubladenstacks.

Die Haltevorrichtung kann selbstverständlich derart ausgebildet sein, dass sie nur einzelne oder auch gleichzeitig mehrere dieser Funktionen erfüllen kann.

Viele dieser Werkzeuge, die für die Handhabung einer Probe verwendet werden, umfassen ein hohlnadelförmiges Element, mit welchem beispielsweise eine Probe aus einem Behälter entnommen oder in einen Behälter abgegeben wird. Bei Spritzen, die sehr häufig bei solchen Werkzeugen eingesetzt werden, bildet die Nadel bzw. die Kanüle dieses hohlnadelförmige Element. Solche Nadeln sind häufig sehr fein, damit beispielsweise die Probe mit hoher Präzision dosiert werden kann. Aber je feiner eine solche Nadel ist, umso anfälliger wird sie auf Defekte. Bei der Handhabung der Probe können sie sehr leicht verbogen oder abgebrochen werden. So reicht unter Umständen schon das Durchstechen eines Septums, damit die Nadel Schaden nimmt. Die Haltevorrichtung umfasst daher vorzugsweise ein Führungselement, welches zur Führung eines solchen hohlnadelförmigen Elements der Probenmanipuliervorrichtung dient. Da die Haltevorrichtung und damit auch das Führungselement in der Kopplungsrichtung verfahrbar an der Befestigungsvorrichtung befestigt ist, ist dieses hohlnadelförmige Element mit seiner Längsachse vorzugsweise ebenfalls in der Kopplungsrichtung ausgerichtet und das Führungselement weist eine Öffnung auf, in welcher das hohinadelförmige Element in der Kopplungsrichtung bewegt werden kann. Das hohinadelförmige Element ist in diese Öffnung eingefädelt, wobei die Haltevorrichtung beim Bewegen des hohinadelförmigen Elements typischerweise derart positioniert wird, dass sich das Führungselement im Endbereich des hohlnadelförmigen Elements befindet.

Je nach Anwendung reicht es unter Umständen aus, wenn diese Öffnung nicht rundum geschlossen ist und sich das hohlnadelförmige Element folglich nicht ausschliesslich in der Kopplungsrichtung bewegen kann. Mit Vorteil ist die Öffnung jedoch rundum geschlossen, sodass sich das hohlnadelförmige Element in der Öffnung ausschliesslich in der Kopplungsrichtung bewegen kann, jede Bewegung in einer anderen Richtung jedoch blockiert wird. D. h. die Begrenzungslinie der Öffnung ist geschlossen, wobei sie vorzugsweise im Wesentlichen einer Umfangslinie eines Querschnitt des hohladelförmigen Elements entspricht. Bei einer Kanüle einer Spritze ist diese Umfangslinie typischerweise kreisförmig.

Zusätzlich zu diesem Führungselement kann das Werkzeug einen Knickschutz umfassen, welcher zum Verhindern eines Knickens des hohlnadelförmigen Elements der Probenmanipuliervorrichtung dient. Beispielsweise, wenn dieses in der Kopplungsrichtung bewegt, etwa in ein Septum eingestochen wird. Ein solcher Knickschutz ist insbesondere bei langen Nadeln einer Spritze sinnvoll, um zu Verhindern, dass sich die Nadel bei einer Beanspruchung in der Kopplungsrichtung (oder einer anderen Richtung) verbiegt oder sie sogar knickt oder bricht. Ein solcher Knickschutz kann beispielsweise an der Haltevorrichtung befestigt sein, sodass sie mit dieser relativ zur Probenmanipuliervorrichtung bewegt werden kann, sie kann aber auch an der Probenmanipuliervorrichtung selber befestigt sein. Vorzugsweise ist er jedoch an der Befestigungsvorrichtung befestigt, wobei er auch lösbar daran befestigt sein kann.

Wie bereits erwähnt, ist die Befestigungsvorrichtung lösbar an einer Werkzeughalterung einer Probenhandhabungseinrichtung befestigbar. Grundsätzlich ist es zwar möglich, dass die Befestigungsvorrichtung in beliebiger Art und Weise, beispielsweise magnetisch, mittels Schraub- oder Klemmverbindungen, durch Herstellen einer kraftschlüssigen Verbindung oder durch beliebige andere Verbindungstechniken an der Probenhandhabungseinrichtung befestigt werden kann, wobei die Befestigung selber etwa durch eine oder mehrere Bewegungen in bestimmten Richtungen oder auch durch eine oder mehrere Drehbewegungen bzw. Kombinationen solcher Bewegungen erfolgen kann.

Bei einer bevorzugten Ausführungsform der Erfindung ist die Befestigungsvorrichtung jedoch in der Kopplungsrichtung an die Werkzeughalterung an- bzw. von ihr abkoppelbar. Auf diese Weise erfolgen sowohl die An- bzw. Abkopplung des Werkzeugs an die bzw. von der Werkzeughalterung, die Relativbewegung der Haltevorrichtung und der Befestigungsvorrichtung wie auch die An- und Abkopplung der Haltevorrichtung an die bzw. von der Werkzeughalterung in ein- und derselben Kopplungsrichtung.

Diese An- bzw. Abkopplung erfolgt vorzugsweise durch Verbinden bzw. Lösen einer formschlüssigen Verbindungsvorrichtung, wobei die Befestigungsvorrichtung ein erstes und die Werkzeughalterung ein zweites Verbindungselement dieser ersten, formschlüssigen Verbindungsvorrichtung umfasst. Um eine hohe Genauigkeit bei der Dosierung der Probe zu erreichen, ist diese erste Verbindungsvorrichtung zudem mit Vorteil spielfrei ausgebildet.

Diese erste Verbindungsvorrichtung ist beispielsweise als spielfreie Steckkupplung ausgebildet, wobei die Befestigungsvorrichtung ein männliches und die Werkzeughalterung ein weibliches Kupplungselement der Steckkupplung umfasst.

Da sowohl die Befestigungsvorrichtung wie auch die Haltevorrichtung in derselben Richtung, an der Werkzeughalterung befestigbar sind, kann das Werkzeug auf einfachste Art und Weise an die Werkzeughalterung angekoppelt werden. Da diese als Kopplungsrichtung bezeichnete Befestigungsrichtung darüber hinaus auch mit jener Richtung übereinstimmt, in welcher die Haltevorrichtung an der Befestigungsvorrichtung verfahrbar ist, ergibt sich insgesamt ein äusserst einfacher Ankopplungsvorgang mit Bewegungen in ausschliesslich einer Bewegungsrichtung, nämlich dieser Kopplungsrichtung. Da senkrecht zu dieser Kopplungsrichtung keine Bewegungen der Werkzeughalterung oder des Werkzeugs nötig sind, wird senkrecht zur Kopplungsrichtung auch nur wenig Platz beansprucht, sodass für die Aufbewahrung mehrerer Werkzeuge insgesamt auch weniger Platz benötigt wird. Aus demselben Grund können die Werkzeuge auch nahe bei bzw. unmittelbar neben anderen Objekten positioniert werden, was eine optimalere Nutzung des Raumangebots in der Reichweite der Werkzeughalterung erlaubt.

Die Kopplungsrichtung ist vorzugsweise vertikal bzw. im Wesentlichen vertikal. Eine andere Ausrichtung dieser Kopplungsrichtung ist, obwohl aus technischer Sicht nichts dagegen spricht, nicht üblich.

Obwohl die Probenmanipuliervorrichtung fest an der Befestigungsvorrichtung befestigt sein kann, ist diese vorzugsweise ebenfalls lösbar an der Befestigungsvorrichtung befestigt, sodass sie bei Bedarf auf einfache Art und Weise ausgewechselt werden kann. So kann beispielsweise eine Spritze eines bestimmten Typs durch eine neue Spritze desselben Typs oder durch eine Spritze eines anderen Typs ersetzt werden. Dies kann sowohl von Hand durch eine Bedienperson, als auch automatisch durch eine entsprechende Wechseleinrichtung erfolgen.

Wie bereits erwähnt, ist auch die Haltevorrichtung lösbar an der Werkzeughalterung einer Probenhandhabungseinrichtung befestigbar. Auch hier gilt wie bei der Befestigung der Befestigungsvorrichtung, dass die Haltevorrichtung grundsätzlich in beliebiger Art und Weise an der Werkzeughalterung an der Probenhandhabungseinrichtung befestigt werden kann, etwa durch eine oder mehrere Bewegungen in bestimmten Richtungen oder auch durch eine oder mehrere Drehbewegungen bzw. Kombinationen solcher Bewegungen.

Bei einer bevorzugten Ausführungsform der Erfindung ist jedoch auch die Haltevorrichtung durch Verbinden bzw. Lösen einer zweiten formschlüssigen Verbindungsvorrichtung an die Werkzeughalterung an- bzw. von dieser abkoppelbar. Die Haltevorrichtung umfasst wiederum ein erstes und die Werkzeughalterung ein zweites Verbindungselement dieser zweiten, formschlüssigen Verbindungsvorrichtung. Da für eine hohe Genauigkeit bei der Dosierung der Probe keine präzise Positionierung der Haltevorrichtung notwendig ist, kann die zweite Verbindungsvorrichtung spielbehaftet sein.

Auch diese zweite Verbindungsvorrichtung ist beispielsweise als Steckkupplung ausgebildet, wobei die Haltevorrichtung ein männliches und die Werkzeughalterung ein weibliches Kupplungselement dieser Steckkupplung umfasst.

Um die Funktionsvielfalt der verwendbaren Werkzeuge weiter zu vergrössern, umfasst ein solches Werkzeug in einer weiteren bevorzugten Ausführungsform der Erfindung ein bewegliches Element. Ein solches bewegliches Element ist zwar nicht notwendig und könnte auch weggelassen werden, ermöglicht aber viele zusätzliche Funktionen der verwendbaren Werkzeuge.

Das bewegliche Element könnte beispielsweise durch ein bewegliches Element der Probenmanipuliervorrichtung gebildet werden, etwa durch den Kolben einer Spritze. Bei anderen Werkzeugen kann es beispielsweise zum Greifen eines Behälters, zum Betätigen einer Pipettierhilfe einer Pipette, zum Betätigen eines Öffnungs- oder Schliessmechanismus oder zum Betätigen eines sonstigen beliebigen beweglichen Elements ausgebildet sein.

Dieses bewegliche Element kann beliebig beweglich sein, ist vorzugsweise jedoch in Bezug auf die Probenmanipuliervorrichtung in der Kopplungsrichtung bewegbar. Es ist darüber hinaus mit Vorteil auch in der Kopplungsrichtung an die Werkzeughalterung an- bzw. von ihr abkoppelbar, sodass dieses bewegliche Element nicht nur unabhängig von der Probenmanipuliervorrichtung in der Kopplungsrichtung bewegbar ist, sondern zusätzlich auch in derselben Richtung an die Werkzeughalterung an- bzw. von ihr abkoppelbar ist. Dadurch erfolgt der gesamte An- bzw. Abkopplungsvorgang eines Werkzeugs an die bzw. von der Werkzeughalterung nach wie vor in genau einer Richtung und ist damit äusserst einfach und auch schnell durchführbar.

Auch das bewegliche Element kann im Prinzip in beliebiger Art und Weise an der Werkzeughalterung befestigt werden, wobei dies aber wiederum vorzugsweise durch Verbinden bzw. Lösen einer dritten formschlüssigen Verbindungsvorrichtung geschieht. Hierbei umfasst das bewegliche Element wiederum ein erstes und die Werkzeughalterung ein zweites Verbindungselement dieser dritten, formschlüssigen Verbindungsvorrichtung. Auch bei dieser Verbindungsvorrichtung kann durch eine spielfreie Ausgestaltung die Genauigkeit bei der Dosierung der Probe erhöht werden, weshalb eine spielfreie Kopplung bevorzugt wird.

Auch die dritte Verbindungsvorrichtung ist beispielsweise als Steckkupplung ausgebildet, wobei das bewegliche Element ein männliches und die Werkzeughalterung ein weibliches Kupplungselement dieser Steckkupplung umfasst.

Es gibt viele verschiedene Werkzeuge für das Handling von Proben. Von Spritzen über Greifer und Schüttler hin zu beliebigen anderen Manipulatoren. Auch weitere Funktionen wie beispielsweise ein Beheizen oder Abkühlen der Probe oder das Mischen der Probe mit anderen Stoffen können solche Werkzeuge übernehmen.

Ein sehr häufig verwendetes und kaum wegzudenkendes Werkzeug für das Handling von Proben, beispielsweise für die Aufnahme und die dosierte Abgabe der Probe bei der Flüssigkeitschromatographie, sind Spritzen. Und zwar Spritzen in verschiedensten Ausführungen, beispielsweise mit verschiedenen Volumina, Nadellängen, Nadeldurchmessern, beheizbar, nicht beheizbar usw. Die Probenmanipuliervorrichtung ist daher bevorzugt als Spritze ausgebildet. Diese umfasst typischerweise einen zylindrischen Hohlkörper und einen in dem Hohlkörper bewegbaren Kolben sowie eine an der Spritze befestigte Kanüle, welche meist als Hohlnadel ausgebildet ist.

Der Hohlkörper ist (lösbar) an der Befestigungsvorrichtung befestigt, der Spritzenkolben bildet hierbei das bewegliche und die Kanüle das hohinadelförmige Element.

Bei einer weiteren bevorzugten Ausführungsvariante der Erfindung umfasst das Werkzeug eine Kommunikationsschnittstelle. Diese dient zur Herstellung einer Kommunikationsverbindung zwischen dem Werkzeug und der Probenhandhabungseinrichtung, sodass das Werkzeug beispielsweise werkzeugspezifische Informationen an die Probenhandhabungseinrichtung oder die Probenhandhabungseinrichtung Informationen wie etwa Signale oder Befehle zur Steuerung an das Werkzeug übermitteln kann. Diese Kommunikationsschnittstelle könnte beispielsweise als drahtlose Funkschnittstelle realisiert sein oder elektrische Signale könnten durch elektromagnetische, z. B. kapazitive oder induktive Kopplung zwischen dem Werkzeug und der Probenhandhabungseinrichtung übermittelt werden. Mittels elektromagnetischer Kopplung könnte beispielsweise auch elektrische Energie von der Probenhandhabungseinrichtung zum Werkzeug übertragen werden, welche dieses für den Betrieb des Werkzeugs benötigt, wobei die Energiemenge, die so übertragen werden kann, eher klein ist. Selbstverständlich könnte das Werkzeug auch mit einer separaten, eigenen oder externen Energiequelle versehen oder verbunden sein.

Bei einem besonders bevorzugten Ausführungsbeispiel eines solchen Werkzeugs mit einer Kommunikationsschnittstelle umfasst das Werkzeug wenigstens einen elektrischen Kontakt zur Herstellung wenigstens einer elektrisch leitenden Verbindung zwischen dem Werkzeug und der Probenhandhabungseinrichtung. Zur Übermittlung von Daten reicht eine elektrische Verbindung zwar grundsätzlich aus, aber typischerweise sind zwei oder mehr elektrische Kontakte vorhanden, sodass zwei oder mehr elektrisch leitende Verbindungen zwischen dem Werkzeug und der Probenhandhabungseinrichtung hergestellt werden können. Auf diese Weise können beispielsweise mehr Daten innert kürzerer Zeit übertragen oder aber erheblich komplexere Kommunikations- und Steuerungsverfahren etabliert werden.

Umfasst die Kommunikationsschnittstelle zwei oder mehr elektrisch leitende Verbindungen, können diese aber nicht nur für eine Datenübertragung, sondern mit Vorteil auch für eine Energieübertragung verwendet werden, und zwar prinzipiell sogar in beiden Richtungen. Allerdings wird elektrische Energie typischerweise nur von der Probenhandhabungseinrichtung zum Werkzeug übertragen, sodass das Werkzeug keine separate Stromversorgung benötigt. Diese elektrische Energie kann beim Werkzeug entweder direkt zum Betrieb verwendet werden oder sie könnte auch in einem Energiespeicher wie etwa einer Batterie oder einem Akkumulator, aber auch in einem kapazitiven oder induktiven Energiespeicher gespeichert werden, wobei das Werkzeug dann mit der in diesem Energiespeicher gespeicherten Energie betrieben werden kann.

Demgegenüber ist es von Vorteil, wenn Daten über diese Verbindungen sowohl vom Werkzeug an die Werkzeughalterung wie auch von der Werkzeughalterung an das Werkzeug übertragen werden können. So kann das Werkzeug beispielsweise Informationen über seinen Zustand, seine Ausstattung etc. an die Probenhandhabungseinrichtung und die Probenhandhabungseinrichtung Steuersignale an das Werkzeug übermitteln.

Daten und Energie könnten hierbei gleichzeitig oder zeitversetzt über dieselben elektrischen Verbindungen übertragen werden, vorzugsweise sind jedoch für die Datenübertragung und die Energieübertragung separate elektrische Verbindungen vorgesehen.

Der bzw. die elektrischen Kontakte können in beliebiger Form, beispielsweise als Steck- oder Klemmkontakte ausgebildet sein. Damit die elektrischen Verbindungen beim An- bzw. Abkoppeln des Werkzeugs an die Werkzeughalterung automatisch und möglichst einfach hergestellt bzw. gelöst werden können, umfassen die Kontakte bevorzugt eine Kontaktfläche auf einer Seite und entsprechende, beispielsweise federgelagerte Kontaktstifte auf der anderen Seite. Das Werkzeug umfasst beispielsweise eine bestimmte Anzahl von geeignet angeordneten Kontaktflächen und die Werkzeughalterung eine entsprechende Anzahl und entsprechend angeordnete, federgelagerte Kontaktstifte. Selbstverständlich können die Kontaktflächen und -stifte auch anders verteilt sein. Beim Ankoppeln des Werkzeugs an die Werkzeughalterung werden auf diese Weise automatisch eine entsprechende Anzahl elektrisch leitender Verbindungen zwischen dem Werkzeug und der Probenhandhabungseinrichtung hergestellt. Beim Abkoppeln des Werkzeugs werden diese Verbindungen automatisch auch wieder gelöst.

Obwohl das Herstellen dieser elektrisch leitenden Verbindungen, d. h. beispielsweise die Kontaktierung zwischen den Kontaktflächen und den Kontaktstiften, in beliebigen Richtungen erfolgen kann, werden auch diese Verbindungen bevorzugt durch eine Relativbewegung des Werkzeugs und der Werkzeughalterung in der Kopplungsrichtung hergestellt.

Für den korrekten Betrieb der Probenhandhabungseinrichtung muss diese wissen, welches Werkzeug an seine Werkzeughalterung angekoppelt ist. Diese Information könnte der Probenhandhabungseinrichtung beispielsweise durch Programmierung oder eine einfache Dateneingabe an einem daran angeschlossenen Datenverarbeitungsgerät bekannt gemacht werden.

Bei einem bevorzugten Ausführungsbeispiel umfasst das Werkzeug jedoch einen Speicher, insbesondere einen Datenspeicher, beispielsweise in der Form eines elektrischen oder elektronischen Speichers zur Speicherung von Daten. Diese Daten können beispielsweise werkzeugspezifische Daten oder Informationen umfassen wie etwa Produktionsdatum, Typ, Hersteller, Identifikationscode, Nummern, Lebensdauer etc. Dieser Speicher ist nun derart mit der Kommunikationsschnittstelle bzw. der oder den elektrisch leitenden Verbindungen verbunden, dass die im Speicher gespeicherten Daten über die Kommunikationsschnittstelle bzw. die elektrische leitende/n Verbindung/en zur Probenhandhabungseinrichtung übermittelt werden können. Auf diese Weise kann beispielsweise auch überprüft werden, ob ein bestimmtes Werkzeug sauber an die Werkzeughalterung angekoppelt worden ist. Kann die Probenhandhabungseinrichtung beispielsweise den Identifikationscode des Werkzeugs auslesen, kann davon ausgegangen werden, dass das Werkzeug korrekt angekoppelt ist. Gelingt dies nicht, ist das Werkzeug vermutlich nicht korrekt angekoppelt.

Zur Steuerung und/oder Betätigung des Werkzeugs durch die Probenhandhabungseinrichtung kann das Werkzeug beispielsweise auch eine Datenverarbeitungseinrichtung wie etwa einen Mikroprozessor umfassen, wobei dieser mit einer geeigneten Steuereinrichtung der Probenhandhabungseinrichtung kommunizieren und eine komplexe Steuerung von aktiven und/oder passiven Elementen des Werkzeugs selbständig durchführen könnte. Der Einfachheit halber erfolgt die Steuerung des Werkzeugs jedoch direkt durch die Aktivierung oder Deaktivierung geeigneter aktiver oder passiver Element wie etwa Aktoren, beispielsweise durch simples Ein- oder Abschalten der jeweiligen Energiezufuhr. Es ist hierbei natürlich auch möglich, dass das Werkzeug Sensoren oder andere Bauelement umfasst, welche bestimmte Daten über den Zustand des Werkzeugs oder dessen Interaktion mit anderen Vorrichtungen erfassen und an die Probenhandhabungseinrichtung zurückmelden, sodass die Steuerung gegebenenfalls angepasst werden kann.

Es wäre aber auch möglich, dass das Werkzeug selber über eine Datenverarbeitungseinrichtung wie etwa einen Mikroprozessor verfügt, welcher über die Kommunikationsschnittstelle mit der Probenhandhabungseinrichtung kommuniziert. In diesem Fall könnte in dem Speicher natürlich auch ein Programm zur Abarbeitung durch den Mikroprozessor gespeichert sein.

Der Speicher kann sowohl ein flüchtiger als auch ein nicht flüchtiger Speicher sein. Zudem kann es sich um einen Nur-Lese-Speicher handeln, in welchen ein Mal die zu speichernden Daten hineingeschrieben und dann beliebig oft wieder ausgelesen werden können. Solche Nur-Lese-Speicher gibt es auch als lösch- und wieder programmierbare Speicher. Oder es kann sich um einen wiederbeschreibbaren Speicher handeln, in welchen beliebige Daten, beispielsweise ein Programm oder auch Konfigurationsinformationen, hineingeschrieben und die gespeicherten Informationen beliebig oft wieder ausgelesen werden können. Die Probenhandhabungseinrichtung könnte beispielsweise die Anzahl Benutzungen des Werkzeugs oder auch die Betriebsdauer des Werkzeugs in den Speicher schreiben, sodass jederzeit festgestellt werden kann, beispielsweise ob das Werkzeug noch benutzt werden darf, ob ein Fehler aufgetreten ist, ob eine Wartung erforderlich ist oder ob bereits die zulässige Anzahl Benutzungen erreicht ist. Die Probenhandhabungseinrichtung könnte aufgrund solcher Informationen auch weitere Prozesse in Gang setzen, wie beispielsweise einen Benutzer darüber zu informieren, oder einen Wartungs- bzw. Diagnoseprozess zu starten. Es ist natürlich auch möglich, solche Informationen aktiv vom Werkzeug abzufragen. Je nach gewünschtem Verhalten des Werkzeugs, etwa in Abhängigkeit der konkreten Anwendung, könnte die Probenhandhabungseinrichtung den Speicher neu programmieren und so das Werkzeug mit anwendungsspezifischen Funktionen ausstatten.

Beim bzw. nach dem Abkoppeln des Werkzeugs wird dieses typischerweise in einer nachfolgend als Parkstation genannten Halterung der Probenhandhabungseinrichtung zur Aufbewahrung eines abgekoppelten Werkzeugs abgelegt und bis zur nächsten Verwendung zwischengelagert. Sobald das Werkzeug von der Werkzeughalterung abgekoppelt wird, werden die beim Ankoppeln hergestellten Verbindungen wieder getrennt, sodass keine Daten- oder Energieübertragung zwischen dem Werkzeug und der Probenhandhabungseinrichtung mehr möglich ist. Je nach Werkzeug ist dies auch kein Problem. Es gibt allerdings Werkzeuge, bei denen eine Daten- und/oder Energieübertragung zwischen dem Werkzeug und der Probenhandhabungseinrichtung wünschenswert wäre, obwohl das Werkzeug nicht an die Werkzeughalterung angekoppelt ist, beispielsweise wenn die Probenmanipuliervorrichtung vor der Verwendung vorgeheizt werden muss. Dann könnte das Werkzeug rechtzeitig vor dessen Ankopplung an die Werkzeughalterung entsprechend gesteuert werden, sodass die Probenmanipuliervorrichtung bereits vorgeheizt ist, wenn das Werkzeug zum Gebrauch angekoppelt wird.

Bei einer bevorzugten Ausführungsform der Erfindung umfasst das Werkzeug daher eine entsprechende Kommunikationsschnittstelle zur Herstellung einer Kommunikationsverbindung zwischen dem von der Werkzeughalterung abgekoppelten Werkzeug und der Parkstation, d. h. zwischen dem Werkzeug und der Probenhandhabungseinrichtung.

Eine solche Kommunikation im abgekoppelten Zustand könnte beispielsweise erreicht werden, indem das Werkzeug wie bereits vorgängig erwähnt mit einer Funkschnittstelle versehen würde, sodass eine geeignete Steuereinrichtung über diese Funkschnittstelle jederzeit mit dem Werkzeug kommunizieren und es steuern kann.

Damit aber das Werkzeug, wie ebenfalls bereits erwähnt, nicht mit einer eigenen Energieversorgung versehen werden muss, umfasst auch diese Kommunikationsschnittstelle vorzugsweise wenigstens einen, typischerweise zwei oder mehr elektrische Kontakte zur Herstellung wenigstens einer bzw. entsprechend mehr elektrisch leitender Verbindungen zwischen dem Werkzeug und der Parkstation. Auch bei dieser Kommunikationsschnittstelle soll unter dem Begriff Kommunikation nicht nur eine Datenübertragung, sondern auch eine Energieübertragung verstanden werden. Im Übrigen gilt auch für diese Kommunikationsschnittstelle zur Kommunikation des Werkzeugs mit der Probenhandhabungseinrichtung via Parkstation sinngemäss dasselbe wie für die oben beschriebene Kommunikationsschnittstelle zur Kommunikation via Werkzeughalterung.

Tatsächlich könnten auch bei einer mittels direkter elektrischer Verbindungen realisierten Kommunikationsschnittstelle für die Kommunikation via Parkstation dieselben Kommunikationsverbindungen verwendet werden wie bei der Kommunikation via Werkzeughalterung. Da die Realisierung einer solchen Kommunikationsschnittstelle mechanisch jedoch aufwändiger ist als eine separate Schnittstelle, umfasst das Werkzeug vorzugsweise eine zusätzliche Kommunikationsschnittstelle, beispielsweise zusätzliche elektrische Kontakte zur Herstellung von separaten elektrischen Verbindungen zur Parkstation. Beim Abkoppeln des Werkzeugs von der Werkzeughalterung, d. h. beim Ablegen des Werkzeugs in der Parkstation werden diese elektrischen Verbindungen automatisch hergestellt und beim Ankoppeln des Werkzeugs an die Werkzeughalterung, d. h. beim Aufnehmen des Werkzeugs aus der Parkstation automatisch wieder getrennt.

Es ist zu beachten, dass das Merkmal, der Kommunikationsschnittstelle völlig unabhängig ist von den restlichen in diesem Dokument beschriebenen Merkmalen des Werkzeugs, der

Werkzeughalterung oder der Probenhandhabungseinrichtung. Das gilt auch für sämtliche mit einer wie vorgängig beschriebenen Kommunikationsschnittstelle im Zusammenhang stehenden Merkmale wie etwa ein Speicher, ein Mikroprozessor, aktive oder passive Elemente wie Aktoren oder Sensoren, die über diese Schnittstelle kommunizieren oder darüber steuerbar sind, eine Probenhandhabungseinrichtung mit einer entsprechenden Kommunikationsschnittstelle und/oder einer entsprechenden Steuervorrichtung, eine Kommunikationsschnittstelle zur Kommunikation mit einer Parkstation etc.

Eine derartige Kommunikationsschnittstelle sowie weitere damit im Zusammenhang stehende Merkmale können daher in ein Werkzeug für eine Probenhandhabungseinrichtung, eine Werkzeughalterung, eine Probenhandhabungseinrichtung oder auch eine Parkstation integriert werden, und zwar insbesondere unabhängig davon, ob das Werkzeug, die Werkzeughalterung oder die Probenhandhabungseinrichtung gemäss der Erfindung ausgebildet sind oder nicht. D. h. unabhängig davon, ob das Werkzeug eine entsprechend ausgebildete Haltevorrichtung oder die Werkzeughalterung entsprechende Befestigungsmittel umfasst, in welcher Art und Weise das Werkzeug an eine Probenhandhabungseinrichtung angekoppelt wird oder ob das Werkzeug oder die Werkzeughalterung gemäss einem der bevorzugten Ausführungsbeispiele ausgebildet ist. Es ist beispielsweise auch möglich, dass ein Werkzeug mit einer solchen Kommunikationsschnittstelle (wie auch immer) an eine Probenhandhabungseinrichtung angekoppelt werden kann, obwohl diese selber gar nicht über eine entsprechende Kommunikationsschnittstelle verfügt, das Werkzeug also entweder gar keine Signale über diese Schnittstelle überträgt oder über diese Schnittstelle mit einem anderen Gerät kommuniziert bzw. über diese Schnittstelle Energie überträgt.

Bei gewissen Werkzeugen ist es notwendig oder zumindest hilfreich, dass sie einen Anschluss für flüssige und/oder gasförmige Stoffe umfassen. Beispielsweise zur Zu- oder Abführung von Wasch- oder Spülflüssigkeiten oder von Stoffen, mit welchen die Probe zur Reaktion gebracht werden soll. Flüssige oder gasförmige Stoffe könnten auch zur Betätigung von entsprechenden pneumatischen oder hydraulischen Elementen des Werkzeugs verwendet werden.

Obwohl eine solche Schnittstelle bei vielen Werkzeugen nicht notwendig ist und daher auch weggelassen werden könnte, umfasst das Werkzeug daher bei einer weiteren bevorzugten Ausführungsform wenigstens eine Fluidschnittstelle zur Herstellung wenigstens einer Fluidverbindung zwischen dem Werkzeug und der Probenhandhabungseinrichtung, wobei im Rahmen dieser Beschreibung der Begriff Fluid sowohl für gasförmige wie auch für flüssige Stoffe verwendet wird.

Das Herstellen bzw. Lösen einer solchen Fluidverbindung erfolgt vorzugsweise gleichzeitig mit dem An- bzw. Abkopplung des Werkzeugs an die bzw. von der Werkzeughalterung. Die Fluidschnittstelle umfasst beispielsweise ein erstes Element einer bekannten Steckkupplung wobei die Werkzeughalterung ein entsprechendes zweites Element einer solchen Steckkupplung umfasst.

Die Werkzeughalterung der Probenhandhabungseinrichtung ist wie bereits beschrieben in einer z-Richtung verfahrbar an der Probenhandhabungseinrichtung befestigt, an dieser befestigbar oder als Teil derselben ausgebildet. Die Werkzeughalterung ist beispielsweise verfahrbar an einer Werkzeugaufnahme befestigt, welche ihrerseits am Schlitten einer Probenhandhabungseinrichtung befestigt ist. Bei einer Probenhandhabungseinrichtung, welche eine Schlittenführung mit einem in einer oder in zwei verschiedenen, meist senkrecht zueinander stehenden Richtungen verfahrbaren Schlitten umfasst, ist die Werkzeugaufnahme typischerweise an einem Ende des Schlittens befestigt. Entsprechend ist die Werkzeughalterung senkrecht verfahrbar an der Probenhandhabungseinrichtung befestigt, wobei die Senkrechte typischerweise als z-Richtung bezeichnet wird.

Vorzugsweise ist daher das Werkzeug auch in der z-Richtung an die Werkzeughalterung an- bzw. von dieser abkoppelbar.

Die horizontale Richtung bzw. die horizontalen Richtungen, in denen der Schlitten an der Schlittenführung verfahrbar ist, werden typischerweise als x bzw. x und y bezeichnet. Allerdings muss diese z-Richtung nicht unbedingt genau senkrecht sein, sondern kann auch leicht von der Senkrechten abweichen, oder die Probenhandhabungseinrichtung kann gänzlich anders ausgebildet sein, sodass die z-Richtung, in welcher die Werkzeughalterung verfahrbar ist, eine beliebige andere Raumrichtung sein kann. Selbstverständlich ist es auch möglich, dass die Werkzeughalterung bzw. die Werkzeugaufnahme über einen oder mehrere Schwenkarme bewegt wird, wobei für die Bewegung der Werkzeughalterung auch eine Kombination von Translations- und Rotationsbewegungen möglich ist.

Die Werkzeugaufnahme ist typischerweise fest am Schlitten befestigt, beispielsweise angeschraubt, und umfasst vorzugsweise eine Führung, entlang welcher die Werkzeughalterung verfahrbar ist. Diese Führung kann beispielsweise als Nut oder als Schiene ausgebildet sein, wobei die Werkzeughalterung das zugehörige, geführte Gegenstück umfasst.

Zum Verfahren der Werkzeughalterung an der Probenhandhabungseinrichtung in der z-Richtung verfügt die Probenhandhabungseinrichtung über einen (ersten) Antrieb, wobei es im Prinzip unerheblich ist, wie dieser Antrieb genau ausgestaltet ist. Je nach Anforderungen an die Geschwindigkeit und Präzision der auszuführenden Bewegungen des Werkzeugs kann ein geeigneter Antrieb gewählt werden. Vorzugsweise umfasst dieser Antrieb allerdings einen Elektromotor, beispielsweise einen beliebigen Gleich- oder Dreh- bzw. Wechselstrommotor, da eine Energieversorgung mit elektrischer Energie typischerweise bereits vorhanden ist. Mit Vorteil ist der Elektromotor ein Schrittmotor, der bei geeigneter Ansteuerung und bei entsprechender Ausbildung die gewünschten Bewegungen der Werkzeughalterung äusserst schnell und präzise ausführen kann. Während der Antrieb auch als Teil der verfahrbaren Werkzeughalterung ausgebildet sein kann und mitbewegt würde, ist es von Vorteil, dass dieser Antrieb als Teil der Werkzeugaufnahme (oder eines sonstigen Elements der Probenhandhabungseinrichtung) ausgebildet ist, da sich auf diese Weise beispielsweise die zu bewegende Masse verringern lässt.

An eine solche Werkzeughalterung ist nun ein Werkzeug zur Handhabung einer Probe an- und natürlich auch wieder davon abkoppelbar. Hierfür umfasst die Werkzeughalterung erste Befestigungsmittel zum lösbaren Befestigen einer Befestigungsvorrichtung des Werkzeugs. Gemäss der Erfindung umfasst die Werkzeughalterung zudem zweite Befestigungsmittel zum lösbaren Befestigen einer Haltevorrichtung des Werkzeugs, wobei die ersten und zweiten Befestigungsmittel relativ zueinander in der z-Richtung verfahrbar sind. Auf diese Weise können die Haltevorrichtung und die Befestigungsvorrichtung eines Werkzeugs, welche ja in der Kopplungsrichtung relativ zueinander bewegbar sind, einfach an die Werkzeughalterung angekoppelt und im angekoppelten Zustand relativ zueinander in der z-Richtung bewegt werden. Für die Ankopplung ist das Werkzeug hierbei derart positioniert, beispielsweise in einer Parkstation der Probenhandhabungsvorrichtung deponiert, dass die Kopplungsrichtung des Werkzeugs mit der z-Richtung der Werkzeughalterung übereinstimmt, typischerweise also senkrecht, d. h. vertikal bzw. im Wesentlichen vertikal ist.

Für die Ausführung der Relativbewegung zwischen den ersten und zweiten Befestigungsmitteln in der z-Richtung weist die Werkzeughalterung einen (zweiten) Antrieb auf, der an sich wiederum beliebig entsprechend den Anforderungen der jeweiligen Anwendung ausgebildet sein kann. Um die Anzahl der Bauteile für die Fertigung der Probenhandhabungseinrichtung möglichst gering zu halten, ist der Antrieb zum Verfahren der zweiten Befestigungsmittel an der Werkzeughalterung vorzugsweise der gleiche wie jener zum Verfahren der Werkzeughalterung an der Werkzeugaufnahme.

Bei einer bevorzugten Ausführungsform einer erfindungsgemässen Werkzeughalterung sind die ersten Befestigungsmittel fest an der Werkzeughalterung befestigt und lassen sich in Bezug auf die Werkzeughalterung somit nicht bewegen. Demgegenüber sind die zweiten Befestigungsmittel in der z-Richtung verfahrbar an der Werkzeughalterung befestigt, wobei der Antrieb zum Verfahren dieser zweiten Befestigungsmittel in der z-Richtung ausgebildet ist, sodass die Haltevorrichtung eines Werkzeugs nach dem Ankoppeln an die Werkzeughalterung mit diesem zweiten Antrieb in der z-Richtung bewegt werden kann.

Damit auch eine Probenmanipuliervorrichtung des Werkzeugs an die Werkzeughalterung angekoppelt werden kann, umfasst diese bei einer weiteren bevorzugten Ausführungsvariante dritte Befestigungsmittel zum lösbaren Befestigen eines beweglichen Elements der Probenmanipuliervorrichtung. Auch hier sind die ersten und dritten Befestigungsmittel relativ zueinander in der z-Richtung verfahrbar, und zwar unabhängig von einer Relativbewegung zwischen den ersten und den zweiten Befestigungsmitteln. D. h. die zweiten und dritten Befestigungsmittel können relativ zueinander in der z-Richtung bewegt werden. Auf diese Weise kann auch ein bewegliches Element in der z-Richtung an die Werkzeughalterung angekoppelt und im angekoppelten Zustand in Bezug auf die Befestigungsvorrichtung und unabhängig von der Haltevorrichtung in der Kopplungsrichtung, d. h. der z-Richtung bewegt werden.

Auch für die Relativbewegung zwischen den ersten und dritten Befestigungsmitteln wird ein Antrieb benötigt, wobei für diesen sinngemäss dasselbe gilt wie für den Antrieb zum Bewegen der zweiten bzw. auch der ersten Befestigungsmittel.

Bei einem weiteren bevorzugten Ausführungsbeispiel der Werkzeughalterung sind wiederum die ersten Befestigungsmittel fest an der Werkzeughalterung befestigt und die dritten Befestigungsmittel sind mit dem Antrieb in der z-Richtung verfahrbar an der Werkzeughalterung befestigt, sodass das bewegliche Element der Probenmanipuliervorrichtung nach dem Ankoppeln mit diesem dritten Antrieb in der z-Richtung bewegt werden kann. Entsprechend können bei diesem Beispiel einerseits mit dem ersten Antrieb die Werkzeughalterung samt den ersten Befestigungsmitteln an der Probenhandhabungseinrichtung und andererseits mit dem zweiten bzw. dritten Antrieb die zweiten respektive dritten Befestigungsmittel unabhängig voneinander und relativ zueinander jeweils ebenfalls in der z-Richtung verfahren werden.

Eine Probenhandhabungsvorrichtung gemäss der Erfindung umfasst eine in der z-Richtung verfahrbare Werkzeughalterung wie soeben beschrieben, welche an der Probenhandhabungseinrichtung, beispielsweise einer Werkzeugaufnahme, befestigt oder befestigbar ist oder als Teil der Probenhandhabungseinrichtung ausgebildet ist.

Wie weiter oben bereits beschrieben, umfasst die Probenhandhabungseinrichtung mit Vorteil auch eine Kommunikationsschnittstelle zur Herstellung einer Kommunikationsverbindung zwischen der Probenhandhabungseinrichtung und dem Werkzeug. Diese Kommunikationsschnittstelle ist in bevorzugter Weise in der Form elektrischer Kontakte realisiert, welche beispielsweise als Teil der Werkzeughalterung ausgebildet sind, sodass beim Ankoppeln eines Werkzeugs mit entsprechenden elektrischen Kontakten automatisch eine oder mehrere elektrische Verbindungen zwischen der Probenhandhabungseinrichtung und dem Werkzeug hergestellt werden. Wie ebenfalls bereits beschrieben, können diese elektrischen Verbindungen sowohl für die Übertragung von Daten als auch von Energie genutzt werden. Zur Generierung bzw. Verarbeitung von Signalen, die über diese Kommunikationsschnittstelle übertragen werden sollen, umfasst die Probenhandhabungseinrichtung typischerweise eine oder mehrere entsprechende Signalquellen wie beispielsweise eine Datenverarbeitungseinrichtung oder eine Stromversorgung - oder ist mit solchen verbunden - wobei die Kommunikationsschnittstelle mit dieser bzw. diesen Signalquellen verbunden ist.

Für den Austausch von Informationen mit dem Werkzeug, beispielsweise die Verarbeitung von werkzeugspezifischen Daten, welche über die Kommunikationsschnittstelle vom Werkzeug empfangen werden oder für die Übermittlung von Steuersignalen an das Werkzeug, umfasst die Probenhandhabungseinrichtung vorzugsweise einen Mikroprozessor sowie geeignete Sender und Empfänger zur Übertragung der Signale.

Zur Energieversorgung der Probenhandhabungseinrichtung wie auch der daran angekoppelten Werkzeuge ist die Probenhandhabungseinrichtung vorzugsweise an ein ortsübliches Stromversorgungsnetz angeschlossen.

In einer anderen bevorzugten Ausführungsform umfasst die Probenhandhabungseinrichtung auch eine Fluidschnittstelle, damit auch Werkzeuge anschliessbar sind, bei welchen im Betrieb die Zu- oder Wegführung eines Fluids notwendig oder hilfreich ist.

Eine Probenhandhabungsanordnung gemäss der Erfindung umfasst eine Probenhandhabungseinrichtung mit einer Werkzeughalterung wie soeben beschrieben sowie wenigstens ein, typischerweise jedoch zwei oder mehr Werkzeug gemäss der Erfindung, wobei jeweils eines dieser Werkzeuge an der Probenhandhabungseinrichtung befestigt sein kann.

Zur Aufbewahrung dieser Werkzeuge weist die Probenhandhabungsanordnung mit Vorteil eine Parkstation auf, wie sie ebenfalls bereits weiter oben beschrieben worden ist.

Das erfindungsgemässe Verfahren zum An- bzw. Abkoppeln eines erfindungsgemässen Werkzeugs an eine bzw. von einer Werkzeughalterung einer Probenhandhabungseinrichtung zeichnet sich dadurch aus, dass zunächst die Werkzeughalterung und das Werkzeug gegenseitig geeignet positioniert werden. Danach wird das Werkzeug ausschliesslich durch Relativbewegungen der Werkzeughalterung, der zweiten Befestigungsmittel, der Befestigungsvorrichtung und/oder der Haltevorrichtung an die Werkzeughalterung an- bzw. von dieser abgekoppelt. Diese An- bzw. Abkopplung erfolgt hierbei in der z-Richtung, welche wie bereits beschrieben der Kopplungsrichtung entspricht, in welcher die Haltevorrichtung wie beschrieben relativ zur Befestigungsrichtung verfahrbar ist. D. h. die Werkzeughalterung wird zur Ankopplung des Werkzeugs derart positioniert, dass einander entsprechende Befestigungsmittel (der Werkzeughalterung) und Verbindungselemente (des Werkzeugs, welches typischerweise in einer Parkstation deponiert ist) in z-Richtung quasi übereinander liegen.

Dann kann das Werkzeug durch eine einzige aktive Bewegung der Werkzeughalterung in der z-Richtung auf das Werkzeug zu sowie eine einzige aktive Bewegung der Werkzeughalterung in der z-Richtung vom Werkzeug weg an die Werkzeughalterung angekoppelt werden. Lediglich die Verriegelung der Verbindungsvorrichtungen erfordert allenfalls einen kurzen Unterbruch oder eine Verlangsamung einer solchen aktiven Bewegung in z-Richtung oder es ist eine zusätzliche aktive Bewegungen einzelner Element in der z-Richtung notwendig. D. h. auch das Abheben des Werkzeugs nach dem Ankoppeln erfolgt in der z-Richtung, wobei diese Abheb-Bewegung gleichzeitig auch zur Verriegelung der Verbindungen genutzt werden kann. D. h. sowohl das Hinfahren der Werkzeughalterung zum Werkzeug, das Ankoppeln wie auch das Abheben des Werkzeugs erfolgt in derselben Richtung, nämlich der z-Richtung. Dasselbe gilt auch beim Abkoppeln, bei welchem eine Bewegung einzelner Elemente in der z-Richtung zum Entriegeln der Verbindungsvorrichtungen genutzt werden kann.

Falls das anzukoppelnde Werkzeug auch eine Probenmanipuliervorrichtung mit einem beweglichen Element umfasst, welches angekoppelt werden soll, wird dieses vorzugsweise im Wesentlichen gleichzeitig mit den An- bzw. Abkoppeln der Haltevorrichtung und der Befestigungsvorrichtung ebenfalls durch gegenseitige Relativbewegungen an die Werkzeughalterung an- bzw. von dieser abgekoppelt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer erfindungsgemässen Probenhandhabungseinrichtung;
- Fig. 2: eine schematische Darstellung einer Werkzeugaufnahme mit einer daran befestigten erfindungsgemässen Werkzeughalterung;
- Fig. 3: eine schematische Darstellung eines erfindungsgemässen Werkzeugs;
- Fig. 4: eine schematische Detailansicht einer Haltevorrichtung des Werkzeugs aus Fig. 3;
- Fig. 5: eine schematische Darstellung des Werkzeugs aus Fig. 3, angekoppelt an die Werkzeughalterung aus Fig. 2;
- Fig. 6: eine detailliertere Darstellung einer weiteren erfindungsgemässen Werkzeugaufnahme mit daran befestigter Werkzeughalterung;
- Fig. 7: eine schematische Darstellung des Kopplungsmechanismus zwischen einem Werkzeug und einer Werkzeughalterung vor dem Ankoppeln;
- Fig. 8: eine detaillierte Ansicht eines erfindungsgemässen Werkzeugs von schräg oben;
- Fig. 9: eine detaillierte Ansicht des Werkzeugs aus Fig. 8 von schräg unten;
- Fig. 10: eine schematische Darstellung einer Parkstation;
- Fig. 11: eine schematische Detailansicht einer entriegelten Steckkupplung sowie
- Fig. 12: eine schematische Detailansicht der Steckkupplung aus Fig. 11 im verriegelten Zustand.
Grundsätzlich sind in den Figuren gleiche Teile mit gleichen Bezugszeichen versehen.

### Wege zur Ausführung der Erfindung

Fig. 1 zeigte eine schematische perspektivische Darstellung einer als Autosampler 1 ausgebildeten Probenhandhabungseinrichtung. Der Autosampler 1 umfasst eine Schlittenführung 2, einen an der Schlittenführung 2 beweglich befestigten Kreuzschlitten 3 sowie eine am Kreuzschlitten 3 befestigte Werkzeugaufnahme 4, an welcher wiederum beweglich eine Werkzeughalterung 5 befestigt ist. Die Schlittenführung 2 ist länglich ausgebildet und definiert eine horizontale x-Richtung 6, in welcher der ebenfalls länglich ausgebildete Kreuzschlitten 3 entlang der Schlittenführung 2 bewegt werden kann. Zusätzlich kann der Kreuzschlitten 3 auf der Schlittenführung 2 in einer y-Richtung 7 verfahren werden, welche horizontal und senkrecht zur x-Richtung 6 ist. Mittels entsprechender Antriebe ist der Kreuzschlitten 3 somit auf der Schlittenführung 2 beliebig in einer horizontalen Ebene verfahrbar.

Die Werkzeughalterung 5 wiederum ist mittels eines entsprechenden Antriebs senkrecht verfahrbar an der Werkzeugaufnahme 4 befestigt und definiert so eine z-Richtung 8 welche rechtwinklig zu der durch die x-Richtung 6 und die y-Richtung 7 definierten horizontalen Ebene liegt.

Die Werkzeughalterung 5 lässt sich somit jeweils unabhängig voneinander in der x-Richtung 6, der y-Richtung 7 sowie der z-Richtung 8 bewegen, sodass sie sich durch geeignete Ansteuerung der Antriebe an praktisch jedem beliebigen Punkt des dreidimensionalen Raums innerhalb der Reichweite der Werkzeughalterung 5 vor der Schlittenführung 2 positionieren lässt.

Weiter umfasst der Autosampler 1 eine an der Schlittenführung 2 befestigte Werkzeugablage 9, in welcher eine Mehrzahl von an die Werkzeugaufnahme 4 ankoppelbaren Werkzeugen aufbewahrt werden können, und steht auf Füssen 10.

Fig. 2 zeigt eine schematische Darstellung einer Werkzeugaufnahme 104 mit einer vertikal (gemäss Darstellung) verfahrbar daran befestigten Werkzeughalterung 105 und Fig. 3 zeigt ein an diese Werkzeughalterung 105 ankoppelbares Werkzeug 140.

Zur Befestigung an der Werkzeughalterung 105 umfasst das Werkzeug 140 eine Befestigungsvorrichtung 141 mit einer Adapterplatte 142 und einer Halterplatte 143, welche durch eine Basis 144 starr miteinander verbunden sind. An der Adapterplatte 142 ist fest ein Befestigungselement befestigt, hier in der Form eines männlichen Kupplungselements 145 einer Steckkupplung.

An dem Werkzeug 140 ist eine Probenmanipuliervorrichtung mit einem beweglichen Element befestigt, hier in der Form einer Spritze 150 mit einem zylindrischen Spritzenkörper 151, einem am unteren Ende einer Kolbenstange 152 und in dem Spritzenkörper 151 beweglichen Kolben sowie einer am unteren Ende des Spritzenkörpers 151 befestigten Hohlnadel 153. Am oberen Ende der Kolbenstange 152 ist ein Befestigungselement, wiederum in der Form eines männlichen Kupplungselements 147 einer Steckkupplung, befestigt, wobei der Kolben im Spritzenkörper 151 mit Hilfe der Kolbenstange 152 in der Richtung des Pfeils 155 bewegt werden kann.

Das Werkzeug 140 umfasst weiter eine Haltevorrichtung 160 mit einer Stange 161, welche in entsprechenden Ausnehmungen der Adapterplatte 142 und der Halterplatte 143 beweglich gehalten ist. Am unteren Ende der Stange 161 ist eine Nadelführung 163 befestigt, welche ein Loch 164 aufweist, durch welches die Hohlnadel 153 der Spritze 150 genau passt. Figur 4 zeigt die Haltevorrichtung 160 in einer Ansicht von oben. Am oberen Ende der Stange 161 ist ein weiteres Befestigungselement, wiederum in der Form eines männlichen Kupplungselements 146 einer Steckkupplung, befestigt, wobei die Haltevorrichtung 160 samt Nadelführung 163 in der Richtung des Pfeils 165 bewegt werden kann.

Wird nun beispielsweise die Haltevorrichtung 160 räumlich fixiert und die Befestigungsvorrichtung 141 in der durch den Pfeil 165 angegebenen Richtung verfahren, bewegt sich die Hohlnadel 153 in dem Loch 164 entsprechend auf oder ab und wird somit durch die Nadelführung 163 geführt.

Die Werkzeugaufnahme 104 umfasst ein starres Gestell mit einer Rückwand 110, einer Seitenwand 111, einer Deckplatte 112 sowie einer Lagerplatte 113. An der von der Werkzeughalterung 105 abgewandten Seite der Rückwand 110 ist eine Kupplungsplatte 121 ausgebildet, mittels welcher die Werkzeugaufnahme 104 fest an einem Kreuzschlitten 3 einer Probenhandhabungseinrichtung 1 befestigt, beispielsweise angeschraubt werden kann.

Eine Führung 120 dient zur Führung der Werkzeughalterung 105 in der vertikalen Richtung, wobei die Führung 120 zwischen Deckplatte 112 und Lagerplatte 113 eingespannt oder wie im vorliegenden Beispiel an der Innenseite der Seitenwand 111 ausgebildet sein kann. An der Deckplatte 112 ist weiter ein Motor 114 befestigt, an dessen Drehachse eine mit einem Aussengewinde versehene Welle 117 angeflanscht ist, welche durch eine entsprechende Ausnehmung in der Deckplatte 112 hindurch zu der Lagerplatte 113 geführt ist, in welcher die Welle 117 drehbar gelagert ist.

Die Werkzeughalterung 105 umfasst einen von der Führung 120 geführten Rahmen 125, welcher eine Deckplatte 126 sowie eine Bodenplatte 127 umfasst, welche durch Haltestangen 128, 129 starr miteinander verbunden sind. Der Rahmen 125 umfasst zur Führung 120 passende, geführte Elemente wie beispielsweise entsprechende Ausnehmungen in der Deckplatte 126 und der Bodenplatte 127. Auch die Welle 117 ist durch eine oder mehrere entsprechende Ausnehmung in der Deckplatte 126 und der Bodenplatte 127 geführt, wobei typischerweise eine dieser Ausnehmungen ein Innengewinde aufweist, welches zum Aussengewinde der Welle 117 passt und darin eingreift. Wird nun die Welle 117 vom Motor 114 in Drehung versetzt, wird der Rahmen 125 je nach Drehrichtung nach oben oder unten bewegt.

An der Bodenplatte 127 ist weiter ein Verbindungselement befestigt. Dieses ist hier als weibliches Kupplungselement 122 einer Steckkupplung ausgeführt und dient zum Ankoppeln der Befestigungsvorrichtung 141 des Werkzeugs 140, oder genauer, zum Ankoppeln des passenden männlichen Kupplungselements 145. Da das Werkzeug 140 (gemäss Darstellung) von unten an die Werkzeughalterung 105 angekoppelt wird, könnte das weibliche Kupplungselement 122 auch auf der Unterseite der Bodenplatte 127 angebracht sein. In diesem Beispiel ist es jedoch auf der Oberseite der Bodenplatte 127, direkt über einer entsprechenden Ausnehmung angebracht, durch welche das männliche Kupplungselement 145 des Werkzeugs 140 geführt werden kann.

Die Führung 120 führt den Rahmen 125 hierbei sowohl in vertikaler Richtung, verhindert gleichzeitig aber auch eine Drehung des Rahmens 125 um die von der Welle 117 definierte vertikale Achse. Die Führung 120 könnte auch weggelassen werden, wobei die Welle 117 dann nicht nur zum vertikalen Verfahren, sondern auch zur Führung der Werkzeughalterung 105 in vertikaler Richtung dient. Entsprechend müsste anderweitig dafür gesorgt werden, dass sich der Rahmen 125 nicht um die Welle 117 dreht.

An der Deckplatte 126 sind zwei weitere Motoren 115, 116 befestigt, an deren Drehachsen jeweils eine mit einem Aussengewinde versehene Welle 118, 119 angeflanscht ist. Beide Wellen 118, 119 sind in entsprechenden Ausnehmungen der Deckplatte 126 und der Bodenplatte 127 drehbar gelagert, sodass sie durch den jeweils zugehörigen Motor 115, 116 in eine Links- oder Rechtsdrehung versetzt werden können.

Zum Ankoppeln der Haltevorrichtung 160 des Werkzeugs 140 umfasst die Werkzeughalterung 105 weiter ein zweites weibliches Kupplungselement 123 einer weiteren Steckkupplung, welches derart an einer Kupplungsplatte 131 befestigt ist, dass das an der Haltevorrichtung des Werkzeugs 140 vorhandene Gegenstück der Steckkupplung, das männliche Kupplungselement 146, wiederum von unten in das weibliche Kupplungselement 123 eingeführt werden kann. Hierfür sind auch in der Bodenplatte 127 entsprechende Ausnehmungen vorhanden. Die Kupplungsplatte 131 selber umfasst wiederum eine mit einem Innengewinde versehene Ausnehmung, durch welche hindurch die Welle 118 geführt ist, sodass die Kupplungsplatte 131 samt weiblichem Kupplungselement 123 durch eine Drehung der Welle 118 nach oben bzw. unten bewegt werden kann. Zur vertikalen Führung der Kupplungsplatte 131 kann wiederum die Welle 118 selber dienen oder es ist eine separate Führung vorgesehen. In diesem Beispiel dient die Haltestange 128 zur Führung der Kupplungsplatte 131.

Entsprechend umfasst die Werkzeughalterung 105 zum Ankoppeln eines allenfalls vorhandenen, weiteren beweglichen Elements des Werkzeugs 140, hier der Kolbenstange 152 mit dem daran befestigen Kolben, ein drittes weibliches Kupplungselement 124 einer dritten Steckkupplung. Dieses Kupplungselement 124 ist an einer weiteren Kupplungsplatte 132 wiederum derart befestigt, dass das Kupplungselement 147 der Kolbenstange 152 wiederum von unten in das weibliche Kupplungselement 124 eingeführt werden kann. Die Bodenplatte 127 weist auch für dieses Kupplungselement 147 des Werkzeugs 140 entsprechende Ausnehmungen auf. Die Kupplungsplatte 132 selber umfasst ebenfalls wiederum eine mit einem Innengewinde versehene Ausnehmung, durch welche hindurch die Welle 119 geführt ist, sodass die Kupplungsplatte 132 samt weiblichem Kupplungselement 124 durch eine Drehung der Welle 119 nach oben bzw. unten bewegt werden kann. Zur vertikalen Führung der Kupplungsplatte 132 kann wiederum die Welle 119 selber dienen oder es ist eine separate Führung vorgesehen. In diesem Beispiel dient die Haltestange 129 zur Führung der Kupplungsplatte 132.

Die Motoren 114, 115, 116 sind in diesem Beispiel als Schrittmotoren ausgebildet.

Fig. 5 zeigt eine schematische Darstellung des Werkzeugs aus Fig. 3, angekoppelt an die Werkzeughalterung aus Fig. 2. Hierbei sind die männlichen Kupplungselemente 145, 146, 147 jeweils von unten durch entsprechende Ausnehmungen in der Bodenplatte 127 des Rahmens 125 geführt und an die jeweils entsprechenden weiblichen Kupplungselemente 122, 123, 124 angekoppelt.

Auf diese Weise kann einerseits mit Hilfe des Motors 113 die Werkzeughalterung 105 samt daran angekoppelter Befestigungsvorrichtung 141 relativ zur Werkzeugaufnahme 104 vertikal verfahren werden. Und andererseits können mit Hilfe der Motoren 114, 115 die Haltevorrichtung 160 bzw. die Kolbenstange 152 samt Kolben unabhängig voneinander vertikal in Bezug auf die Befestigungsvorrichtung 141 verfahren werden, wobei die Hohlnadel 153 durch die Nadelführung 163 geführt wird.

Die Haltevorrichtung 160 ist in Bezug auf die Befestigungsvorrichtung 141 in Fig. 5 verglichen mit Fig. 3 nach oben und die Kolbenstange 152 samt Kolben im Spritzenkörper 151 nach unten verschoben dargestellt.

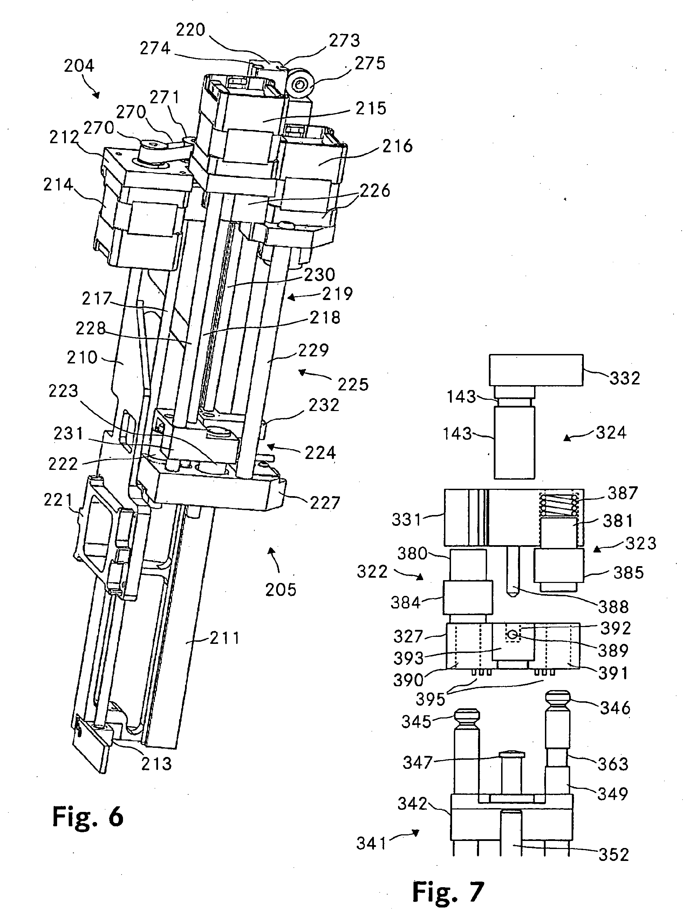

Fig. 6 zeigt eine detailliertere Darstellung einer weiteren erfindungsgemässen Werkzeugaufnahme 204 mit daran befestigter Werkzeughalterung 205.

Die Werkzeugaufnahme 204 umfasst eine starres Gestell mit einer Rückwand 210, einer Seitenwand 211, einer Deckplatte 212 sowie einem an der Rückwand 210 und der Seitenwand 211 befestigten Lagerelement 213, wobei auf der Rückseite der Rückwand 210 wiederum eine Kupplungsplatte 221 zur Befestigung an einem Kreuzschlitten vorhanden ist. Diese als Wände bezeichneten Elemente sind nicht durchgehend ausgebildet, sondern weisen diverse Ausnehmungen auf.

An der Unterseite der Deckplatte 212 auf der Aussenseite der Rückwand 210 der Werkzeugaufnahme 204 ist weiter ein Motor 214 befestigt, dessen Drehachse durch eine Öffnung in der Deckplatte 212 nach oben ragt und an welcher ein Antriebsrad 270 befestigt ist, das über einen Riemen 272 ein weiteres Antriebsrad 271 antreibt, welches an einer mit einem Aussengewinde versehene Welle 217 befestigt ist. Die Welle 217 ist wiederum durch eine entsprechende Ausnehmung in der Deckplatte 212 hindurch zum Lagerelement 213 geführt und auf diese Weise drehbar gelagert und kann vom Motor 214 in Drehung versetzt werden. Die Welle 217 ist mit einem Aussengewinde versehen und die Führung 220 zur Führung der Werkzeughalterung 205 ist eine vertikal an der Innenseite der Seitenwand 211 ausgebildete Schiene mit seitlichen Führungsstangen 273, 274

Die Werkzeughalterung 205 umfasst einen Rahmen 225, welcher eine Deckplatte 226 sowie eine Bodenplatte 227 umfasst, welche durch Haltestangen 228, 229, 230 starr miteinander verbunden sind. Die Welle 217 führt durch Öffnung in der Deckplatte 226, welche mit einem zum Aussengewinde der Welle 217 passenden Innengewinde versehen ist, sodass der Rahmen 225 durch Drehen der Welle 217 nach oben oder unten bewegt werden kann. An der Deckplatte 226 sind zudem eine Mehrzahl von Führungsrollen 275 befestigt, wobei ein Teil dieser Führungsrollen 275 auf einer Seite der Schiene und ein anderer Teil der Führungsrollen 275 auf der anderen Seite der Schiene an den Führungsstangen 273, 274 entlanglaufen.

An der Bodenplatte 227 ist weiter ein weibliches Kupplungselement 222 einer Steckkupplung befestigt, welches zum Ankoppeln der Befestigungsvorrichtung eines Werkzeugs dient.

An der Deckplatte 226 sind zwei weitere Motoren 215, 216 befestigt, an deren Drehachsen jeweils eine mit einem Aussengewinde versehene Welle 218, 219 angeflanscht ist (Welle 219 in Fig. 6 nicht sichtbar). Beide Wellen 218, 219 sind in entsprechenden Ausnehmungen der Deckplatte 226 und der Bodenplatte 227 drehbar gelagert, sodass sie durch den jeweils zugehörigen Motor 215, 216 in eine Links- oder Rechtsdrehung versetzt werden können.

Die Werkzeughalterung 205 umfasst weiter ein zweites weibliches Kupplungselement 223 einer weiteren Steckkupplung, welches an der Unterseite einer Kupplungsplatte 231 befestigt ist, sodass die Haltevorrichtung eines Werkzeugs daran angekuppelt werden kann. Die Kupplungsplatte 231 umfasst wiederum eine mit einem Innengewinde versehene Ausnehmung, durch welche hindurch die Welle 218 geführt ist, sodass die Kupplungsplatte 231 samt weiblichem Kupplungselement 223 durch eine Drehung der Welle 218 nach oben bzw. unten bewegt werden kann. Zur vertikalen Führung der Kupplungsplatte 231 ist die Haltestange 228 durch eine entsprechende Öffnung der Kupplungsplatte 231 geführt.

Entsprechend umfasst die Werkzeughalterung 205 zum Ankoppeln eines Spritzenkolbens einer Spritze ein drittes weibliches Kupplungselement 224 (nicht sichtbar) einer dritten Steckkupplung. Dieses Kupplungselement 224 ist wiederum an der Unterseite einer weiteren Kupplungsplatte 232 befestigt. Die Kupplungsplatte 232 umfasst ebenfalls eine mit einem Innengewinde versehene Ausnehmung, durch welche hindurch die Welle 219 geführt ist, sodass die Kupplungsplatte 232 samt weiblichem Kupplungselement 224 durch eine Drehung der Welle 219 nach oben bzw. unten bewegt werden kann. Zur vertikalen Führung der Kupplungsplatte 232 dient wiederum die Haltestange 229.

Die Motoren 214, 215, 216 sind in diesem Beispiel als Schrittmotoren ausgebildet.

Fig. 7 zeigt den Kopplungsmechanismus zwischen einem Werkzeug und einer Werkzeughalterung. Dargestellt ist eine Bodenplatte 327 einer Werkzeughalterung mit einem darauf befestigten weiblichen Kupplungselement 322, eine Kupplungsplatte 331 der Werkzeughalterung mit einem darunter bzw. darin befestigten weiblichen Kupplungselement 323 sowie die Adapterplatte 342 einer Befestigungsvorrichtung 341 eines anzukoppelnden Werkzeugs mit einem fix darauf befestigten männlichen Kupplungselement 345, einer in einer Führungshülse 349 in senkrechter Richtung beweglich an der Adapterplatte 342 befestigten Nadelführung 363, an deren oberen Ende sich ein männliches Kupplungselement 346 befindet, sowie eine Kolbenstange 352, an deren oberen Endes sich ein weiteres männliches Kupplungselement 347 befindet. Oberhalb der Kupplungsplatte 331 ist eine weitere Kupplungsplatte 332 mit einem weiblichen Kupplungselement 324 dargestellt.

Die beiden Kupplungselemente 322, 323 umfassen je einen zylinderförmigen Kupplungskörper 380, 381 mit kreisförmigem Querschnitt mit einem auf dessen Oberfläche verschiebbaren, federbelasteten Ring 384, 385. Durch die Feder wird der Ring 384, 385 jeweils in der in Fig. 7 dargestellten Position am unteren Ende des Kupplungskörpers 380, 381 gehalten und verriegelt so die Kupplung. Wird der Ring 384, 385 entgegen der Federkraft nach oben geschoben, wird die Kupplung entriegelt und die entsprechenden passenden männlichen Kupplungselemente können widerstandslos, in die weiblichen Kupplungselemente 322, 323 eingeführt werden.

Das Ankoppeln der Befestigungsvorrichtung 341 und der Nadelführung 363 des Werkzeugs erfolgt nun folgendermassen: Zunächst werden die Bodenplatte 327 und die Kupplungsplatte 331 zusammengefahren, wobei der Kupplungskörper 380 in eine Ausnehmung der Kupplungsplatte 331 eingefahren, der Ring 384 durch die Kupplungsplatte 331 jedoch nach unten gedrückt wird und so das Kupplungselement 322 entriegelt. Gleichzeitig wird der Kupplungskörper 381 in eine Ausnehmung der Bodenplatte 327 eingefahren, wobei hier der Ring 384 durch die Bodenplatte 327 nach oben gedrückt wird und so das Kupplungselement 323 entriegelt. Zudem wird ein Bolzen 388, der auf der Unterseite der Kupplungsplatte 331 befestigt ist, in eine Öffnung 392 der Bodenplatte 327 eingeführt. In diese Öffnung 392 ragt ein weiterer, in der Bodenpatte 327 horizontal und federbelastet gelagerter Bolzen 389 hinein, der durch den Bolzen 388 entgegen der Kraft der Feder horizontal verschoben wird, sodass er leicht in eine nach oben gerichtete Öffnung 393 hineinragt.

Dann wird die Adapterplatte 342 von unten an die Bodenplatte 327 gefahren, sodass die männlichen Kupplungselemente 345, 346 des Werkzeugs durch entsprechende Öffnungen 390, 391 in der Bodenplatte 327 in die weiblichen Kupplungselemente 322, 323 eingeführt werden. Gleichzeitig wird das Kupplungselement 347 von unten in die Öffnung 393 eingeführt.

Schliesslich wird die Kupplungsplatte 331 leicht angehoben, sodass der Ring 384 das Kupplungselement 322 verriegelt. Damit hierbei nicht der Kupplungskörper 381 des Kupplungselements 323 von dem Kupplungselement 346 abgehoben wird, ist der Kupplungskörper 381 in der Kupplungsplatte 331 durch eine Feder 387 abgestützt, welche den Kupplungskörper 381 entgegen der Bewegung der Kupplungsplatte 331 nach unten drückt und so dafür sorgt, dass sich lediglich der nicht federbelastete Ring 385 nach oben bewegt und so das Kupplungselement 323 verriegelt. Die Feder 387 hat beispielsweise bei einem Federweg von ca. 3 mm eine Federkraft von ca. 8 Newton. D. h. die Kupplungsplatte 331 wird zum Verriegeln des Kupplungselement 322 um ca. 3 mm angehoben.

Das Ankoppeln der Kolbenstange 352 erfolgt im Wesentlichen gleichzeitig, indem die Kupplungsplatte 332 nach unten gefahren wird. Hierbei wird das Kupplungselement 324 in die Öffnung 393 der Bodenplatte 327 eingeführt und durch den Bolzen 389 wird der Ring 386 auf dem Kupplungskörper 382 nach oben geschoben, sodass das Kupplungselement 324 entriegelt wird. Das entsprechende männliche Kupplungselement 347 befindet sich ja bereits in dieser Öffnung 393. Beim Abheben der Kupplungsplatten 331, 332 gibt dann der Bolzen 388 den Bolzen 389 frei, wodurch auch das Kupplungselement 324 verriegelt wird.

Auf diese Weise werden gleichzeitig die Befestigungsvorrichtung 341, die Nadelführung 363 sowie die Kolbenstange 352 samt Kolben einer Spritze durch ausschliessliche Bewegungen in der Senkrechten, d. h. der vorgängig als Kopplungsrichtung oder auch z-Richtung bezeichneten Richtung an die Werkzeughalterung 305 angekoppelt.

Ob das Werkzeug korrekt angekoppelt ist, lässt sich wie vorgängig bereits erwähnt daran feststellen, dass bestimmte Daten über die beim Ankoppeln hergestellten elektrischen Verbindungen übertragen, bzw. empfangen werden können. Zudem können die Werkzeughalterung bzw. das Werkzeug eine weitere Vorrichtung umfassen, mit welcher sich überprüfen lässt, ob auch das bewegliche Element des Werkzeugs, hier also beispielsweise die Kolbenstange 352, korrekt an die Bodenplatte 327 angekoppelt worden ist. Dies könnte beispielsweise erfolgen, indem ein Magnet an einem dieser beiden Elemente und ein Hallsensor am jeweils anderen Element geeignet angebracht werden. Beispielsweise umfasst das bewegliche Element einen Magneten, so dass ein an der Werkzeughalterung angebrachter Hallsensor nur dann ein bestimmtes Signal liefert, wenn das bewegliche Element korrekt angekoppelt worden ist, d. h. sich der Magnet in der vorgesehenen Position befindet. Die korrekte Ankopplung könnte auch erfolgen, indem das angekoppelte Werkzeug derart an einer Lichtschranke vorbeigeführt wird, dass der Lichtstrahl je nachdem nur dann unterbrochen wird oder durchgängig bleibt, wenn das bewegliche Element korrekt angekoppelt ist. Diese Kopplungsdetektion kann natürlich auch auf anderem Weg, beispielsweise mittels geeigneter kapazitiver, induktiver oder auch rein mechanischer Schalter oder anderer Elemente erfolgen.

Das Abkoppeln erfolgt, indem die Bodenplatte 327 und die Kupplungsplatte 331 zusammengefahren werden, sodass alle drei Kupplungselemente 322, 323 und 324 gleichzeitig entriegelt werden, und danach die Adapterplatte 342 nach unten weggefahren wird.

Auf der Unterseite der Bodenplatte 342 ist zudem eine Mehrzahl von Kontaktstiften 395 dargestellt. Diese sind in der Bodenplatte 327 federgelagert und stellen beim Ankoppeln der Adapterplatte 342 jeweils einen elektrischen Kontakt zu jeweils einer entsprechenden elektrischen Kontaktfläche (nicht sichtbar) auf der Oberseite der Adapterplatte 342 her. Die Kontaktstifte 395 sind elektrisch mit einer (nicht dargestellten) Datenverarbeitungsvorrichtung der Probenhandhabungseinrichtung verbunden. Diese elektrischen Verbindungen dienen beispielsweise zum Ansteuern oder Betätigen von Greifern, Ventilen, Heizungen oder anderen Manipulatoren des Werkzeugs oder auch zur Rückmeldung von Sensordaten beispielsweise von Temperatursensoren des Werkzeugs,

Die Fig. 8 und 9 zeigen je eine Schrägansicht eines erfindungsgemässen Werkzeugs 440, einmal von schräg oben mit einer darin eingesetzten Spritze 450 und einmal von schräg unten ohne Spritze. Das Werkzeug 440 umfasst eine Befestigungsvorrichtung 441 mit einer Adapterplatte 442 und einer Halterplatte 443, welche durch eine Basis, hier in der Form von zwei Führungshülsen 449, starr miteinander verbunden sind. Auf der Oberseite der Adapterplatte 442 befindet sich ein männliches Kupplungselement 445 sowie eine Mehrzahl von elektrischen Kontaktflächen 496 zur Herstellung von elektrischen Verbindungen zwischen der Werkzeughalterung und dem Werkzeug.

Die Spritze 450 ist in entsprechende Öffnungen der Adapterplatte 442 und der Halterplatte 443 eingeführt und mittels eines Flansches 454 an der Adapterplatte 442 befestigt. Sie umfasst eine Kolbenstange 452 mit einem an deren oberen Ende ausgebildeten männlichen Kupplungselement 447.

Das Werkzeug umfasst weiter eine Haltevorrichtung 460, welche zwei in den Führungshülsen 449 beweglich geführte Stangen 461 umfasst, an deren unterem Ende eine Nadelführung 463 befestigt ist. Die Nadelführung 463 umfasst ein austauschbares Führungselement 466, dessen Loch 464 auf den Durchmesser der Hohlnadel 453 der Spritze 450 anpassbar ist. Am oberen Ende einer der Stangen 461 ist zum Ankuppeln der Haltevorrichtung 460 an eine Werkzeughalterung ein männliches Kupplungselement 446 befestigt.

Auf der Rückseite der Nadelführung 463, an der in den Fig. 8 und 9 dargestellten Halterung, kann auch ein Magnet vorgesehen sein, der wie bereits erwähnt zum Öffnen von Probenbehältnissen verwendet werden kann. Die vorgängig erwähnten (nicht dargestellten) Magnete für den Transport von Probenfläschchen können beispielsweise auf der Unterseite des Führungselements 466 angebracht sein.

Die Hohlnadel 453 der Spritze 450 ist einerseits durch das Loch 464 des Führungselementes 466 der Nadelführung 463 und andererseits durch das Loch 468 eines Knickschutzes 467 hindurch geführt, welcher auf der Unterseite der Halterplatte 443 befestigt ist.

Auf der Unterseite der Adapterplatte 442 ist eine Leiterplatte 497 befestigt, welche mit den Kontaktflächen 496 elektrisch verbunden ist und welche einen Speicher zum Speichern beliebiger Daten, beispielsweise ein löschbarer, programmierbarer Nur-Lese-Speicher wie etwa ein EPROM oder ein EEPROM, umfasst. Die Leiterplatte 497 umfasst auf ihrer Unterseite weitere elektrische Kontaktflächen 498, welche dazu dienen, elektrische Kontakte zwischen der Leiterplatte 497 und entsprechenden Kontaktstiften 495 einer Parkstation 499 herzustellen, in welcher das Werkzeug 440 zur Aufbewahrung abgelegt werden kann.

Eine solche Parkstation 499 ist schematisch in Fig. 10 dargestellt. Für die mechanische Kopplung zwischen dem Werkzeug 440 und der Parkstation 499 ist auf der Unterseite der Adapterplatte 442 ein Bolzen 488 vorgesehen, der beim Parkieren des Werkzeugs in der Parkstation 499 in eine entsprechende Öffnung 490 eingeführt wird.

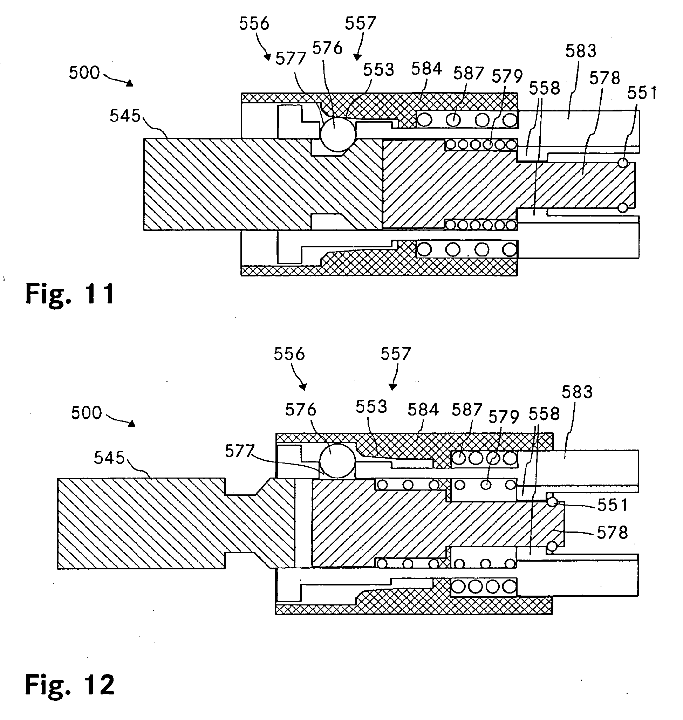

Die Fig. 11 und 12 zeigen in einer schematischen Detailansicht jeweils eine spielfreie Steckkupplung 500, wie sie beispielsweise zum Ankuppeln der Befestigungsvorrichtung und des Spritzenkolbens eines Werkzeugs an die Werkzeughalterung eines Autosamplers verwendet wird. Fig. 11 zeigt die zusammengesteckte Steckkupplung 500 und Fig. 12 zeigt die Steckkupplung 500 vor der Ankopplung des männlichen Kupplungselements 545 an das weibliche Kupplungselement 522.

Das weibliche Kupplungselement 522 umfasst einen Kupplungskörper 580 mit einer Hülse 583, einem auf der Hülse 583 und entgegen der Kraft einer an der Hülse 583 abgestützten Feder 587 verschiebbaren Ring 584 sowie einem in der Hülse 583 und entgegen der Kraft einer weiteren an der Hülse 583 abgestützten Feder 579 verschiebbaren Entriegelungselement 578. Der Ring 584 weist in dem dem männlichen Kupplungselement 545 zugewandten Endbereich 556 einen grossen Innendurchmesser auf. Daran anschliessend folgt ein Klemmbereich 557 des Rings, der infolge einer konischen Abschrägung 553 einen kleiner werdenden Innendurchmesser aufweist.

In der Hülse 583 ist eine Ausnehmung 577 vorhanden, in welcher eine Kugel 576 in Bezug auf die Längsachse der Steckkupplung 500 radial verschiebbar ist. Das männliche Kupplungselement 545 umfasst einen an einer Kolbenstange 552 befestigten und durch eine umlaufende Nut 569 abgetrennten Kupplungskopf 568.

Im angekoppelten Zustand befindet sich die Nut 569 im Bereich der Ausnehmung 577, sodass die Kugel 576 durch die Abschrägung 553 der Hülse 583, welche durch die Kraft der Feder 587 nach links (gemäss Darstellung) gedrückt wird, durch die Ausnehmung 577 in die Nut 569 gepresst wird. Dadurch übt die Kugel 576 auf die Abschrägung 554 an der Hinterseite des Kupplungskopfes 568 und damit auch auf das Entriegelungselement 578, mit welchem der Kupplungskopf 568 in Kontakt ist, eine nach rechts gerichtete Kraft aus. Durch diese Krafteinwirkung wird das Entriegelungselement 578 entgegen der Kraft der Feder 579 an den auf der Innenseite der Hülse 583 vorhandener Anschlag 558 gepresst.

Die Spielfreiheit der Steckkupplung wird nun durch die von der Kugel 576 auf den Kupplungskopf 568 ausgeübte Kraft und die vom Anschlag 558 auf das Entriegelungselement 578 ausgeübte Gegenkraft gewährleistet. Entscheidend hierfür ist der Winkel der Abschrägung 553 in Bezug auf die Längsachse der Steckkupplung 500. Diese Winkel ist vorzugsweise ein Winkel im Bereich zwischen 2 und 15 Grad. Ist der Winkel zu gross, wird die Klemmwirkung zu klein, ist der Winkel zu klein, kann die Kugel 576 nicht mehr genügend in die Ausnehmung 577 geschoben werden. Besonders bevorzugt ist daher ein Winkelbereich zwischen 2 und 5 Grad, da in diesem Bereich ein besonders guter Kompromiss dieser beiden Anforderungen erreicht werden kann.

Zum Entriegeln der Steckkupplung 500 muss lediglich der Ring 584 entgegen der Kraft der Feder 587 auf der Hülse 583 verschoben werden, sodass sich der Endbereich 556 im Bereich der Kugel 576 befindet. Durch die Kraft der Feder 579 wird nun das Entriegelungselement 578 nach links gedrückt, sodass die Kugel 576 von der Abschrägung 554 radial durch die Ausnehmung 577 nach aussen gedrückt und die Steckkupplung 500 somit entriegelt wird. Nun kann das männliche Kupplungselement 545 entfernt werden bzw. wird durch das Entriegelungselement 578 aus der Hülse 583 ausgeworfen. Damit das Entriegelungselement 578 nicht ebenfalls aus der Hülse 583 ausgeworfen wird, umfasst es an seinem anderen Ende einen Anschlag 551 in der Form eines umlaufenden Rings.

Zusammenfassend ist festzustellen, dass die Erfindung ermöglicht, eine Probenhandhabungseinrichtung und zugehörige Werkzeuge zu schaffen, die äusserst einfach und automatisch auswechselbar und dennoch robust ausgebildet sind, sodass sie äusserst flexibel und variabel einsetzbar ist.

## Patentansprüche

1. Werkzeug (140, 440) zur Handhabung einer Probe für einen Autosampler (1) mit einer Befestigungsvorrichtung (141, 341, 441) zum lösbaren Befestigen des Werkzeugs an einer Werkzeughalterung (5, 105, 205, 305) einer Probenhandhabungseinrichtung und einer an der Befestigungsvorrichtung befestigten Probenmanipuliervorrichtung, wobei das Werkzeug (140, 440) eine Haltevorrichtung (160, 460) umfasst, welche
a) in einer Kopplungsrichtung verfahrbar an der Befestigungsvorrichtung befestigt und
b) in der Kopplungsrichtung an die Werkzeughalterung an- bzw. von dieser abkoppelbar ist, **dadurch gekennzeichnet, dass**
c) die Befestigungsvorrichtung in der Kopplungsrichtung an die Werkzeughalterung an- bzw. von ihr abkoppelbar ist.

2. Werkzeug (140, 440) nach Anspruch 1, wobei die Haltevorrichtung (160, 460) ein Führungselement (466) zur Führung einer Kanüle der Probenmanipuliervorrichtung umfasst, wobei eine Längsachse der Kanüle in der Kopplungsrichtung ausgerichtet ist und das Führungselement zur Führung der Kanüle eine rundum geschlossene Öffnung aufweist.

3. Werkzeug (140, 440) nach einem der Ansprüche 1-2, wobei die Befestigungsvorrichtung (141, 341, 441) ein erstes Verbindungselement einer ersten, formschlüssigen Verbindungsvorrichtung umfasst, wobei die Werkzeughalterung (5, 105, 205, 305) ein zweites Verbindungselement der ersten Verbindungsvorrichtung umfasst und die Befestigungsvorrichtung (141, 341, 441) durch Verbinden bzw. Lösen der ersten Verbindungsvorrichtung in der Kopplungsrichtung an die Werkzeughalterung (5, 105, 205, 305) an- bzw. von ihr abkoppelbar ist und die erste Verbindungsvorrichtung vorzugsweise spielfrei ausgebildet ist.

4. Werkzeug (140, 440) nach einem der Ansprüche 1-3, wobei die Haltevorrichtung (160, 460) ein erstes und die Werkzeughalterung (5, 105, 205, 305) ein zweites Verbindungselement einer zweiten formschlüssigen Verbindungsvorrichtung umfasst und die Haltevorrichtung (160, 460) durch Verbinden bzw. Lösen der Verbindungsvorrichtung in der Kopplungsrichtung an die Werkzeughalterung (5, 105, 205, 305) an-bzw. von ihr abkoppelbar ist.

5. Werkzeug (140, 440) nach einem der Ansprüche 1-4, wobei das Werkzeug (140, 440) ein in der Kopplungsrichtung bewegliches Element umfasst, das bewegliche Element ein erstes und die Werkzeughalterung (5, 105, 205, 305) ein zweites Verbindungselement einer dritten formschlüssigen Verbindungsvorrichtung umfasst, das bewegliche Element in der Kopplungsrichtung an die Werkzeughalterung (5, 105, 205, 305) an- bzw. von ihr abkoppelbar ist und die dritte Verbindungsvorrichtung vorzugsweise spielfrei ausgebildet ist.

6. Werkzeug (140, 440) nach Anspruch 5, wobei die Probenmanipuliervorrichtung eine Spritze (150, 450) mit einem an der Befestigungsvorrichtung (141, 341, 441) befestigten, zylindrischen Hohlkörper und einem in dem Hohlkörper bewegbaren und das bewegliche Element bildenden Kolben sowie eine an der Spritze (150, 450) befestigte und die Kanüle umfasst.

7. Werkzeug (140, 440) nach einem der Ansprüche 1-6, wobei es eine Kommunikationsschnittstelle zur Herstellung einer Kommunikationsverbindung zwischen dem Werkzeug (140, 440) und der Probenhandhabungseinrichtung (1) umfasst und diese Kommunikationsverbindung vorzugsweise wenigstens einen elektrischen Kontakt zur Herstellung wenigstens einer elektrisch leitenden Verbindung zwischen dem Werkzeug (140, 440) und der Probenhandhabungseinrichtung (1) umfasst.

8. Werkzeug (140, 440) nach Anspruch 7, wobei das Werkzeug (140, 440) einen Speicher umfasst, in welchem werkzeugspezifische Daten speicherbar sind, welche über die Kommunikationsschnittstelle an die Probenhandhabungseinrichtung (1) übermittelbar sind.

9. Werkzeug (140, 440) nach einem der Ansprüche 7-8 mit einer zusätzlichen Schnittstelle zur Herstellung wenigstens einer Kommunikationsverbindung zwischen dem Werkzeug (140, 440) und einer zur Aufbewahrung eines abgekoppelten Werkzeugs (140, 440) ausgebildeten Parkstation (499) der Probenhandhabungseinrichtung (1).

10. Werkzeug (140, 440) nach einem der Ansprüche 1-9 mit einer Fluidschnittstelle zur Herstellung wenigstens einer Fluidverbindung zwischen dem Werkzeug (140, 440) und der Probenhandhabungseinrichtung (1).

11. Werkzeughalterung (5, 105, 205, 305), welche in einer z-Richtung (8) verfahrbar an einer Probenhandhabungseinrichtung (1) befestigbar ist und erste Befestigungsmittel zum lösbaren Befestigen einer Befestigungsvorrichtung (141, 341, 441) eines Werkzeugs (140, 440) nach einem der Ansprüche 1-10 umfasst, **dadurch gekennzeichnet, dass** die Werkzeughalterung (5, 105, 205, 305) zweite Befestigungsmittel zum lösbaren Befestigen einer Haltevorrichtung (160, 460) des Werkzeugs (140, 440) umfasst, wobei die ersten und zweiten Befestigungsmittel relativ zueinander in der z-Richtung (8) verfahrbar sind und die Werkzeughalterung (5, 105, 205, 305) hierfür vorzugsweise einen Antrieb umfasst, beispielsweise einen Elektromotor wie etwa einen Schrittmotor.

12. Werkzeughalterung (5, 105, 205, 305) nach Anspruch 11, wobei sie dritte Befestigungsmittel zum lösbaren Befestigen eines beweglichen Elements einer Probenmanipuliervorrichtung des Werkzeugs (140, 440) umfasst, wobei die ersten und dritten Befestigungsmittel relativ zueinander in der z-Richtung (8) verfahrbar sind.

13. Probenhandhabungseinrichtung (1) mit einer in einer z-Richtung (8) verfahrbar an der Probenhandhabungseinrichtung (1) befestigbaren Werkzeughalterung (5, 105, 205, 305) nach einem der Ansprüche 11 oder 12.

14. Probenhandhabungsanordnung, umfassend eine Probenhandhabungseinrichtung (1) nach Anspruch 13 mit einer Werkzeughalterung (5, 105, 205, 305) nach einem der Ansprüche 11 - 12 und wenigstens einem an der Werkzeughalterung (5, 105, 205, 305) befestigten oder befestigbaren Werkzeug (140, 440) nach einem der Ansprüche 1 - 10, wobei die Probenhandhabungsanordnung vorzugsweise zwei oder mehr derartige Werkzeuge (140, 440) umfasst.

15. Verfahren zum An- bzw. Abkoppeln eines Werkzeugs (140, 440) nach einem der Ansprüche 1-10 an eine bzw. von einer Werkzeughalterung (5, 105, 205, 305) einer Probenhandhabungseinrichtung (1) nach einem der Ansprüche 11 - 13, **dadurch gekennzeichnet, dass** nach einer geeigneten gegenseitigen Positionierung und Ausrichtung des Werkzeugs (140, 440) und der Werkzeughalterung (5, 105, 205, 305) das Werkzeug (140, 440) ausschliesslich durch Relativbewegungen der Werkzeughalterung (5, 105, 205, 305), der ersten und zweiten Befestigungsmittel, der Befestigungsvorrichtung (141, 341, 441) und/oder der Haltevorrichtung (160, 460) in der z-Richtung an die Werkzeughalterung (5, 105, 205, 305) an- bzw. von dieser abgekoppelt wird.

16. Verfahren nach Anspruch 15, wobei durch die gegenseitigen Relativbewegungen gleichzeitig ein bewegliches Element einer Probenmanipuliervorrichtung an die Werkzeughalterung (5, 105, 205, 350) an- bzw. von dieser abgekoppelt wird.

## Claims

1. Tool (140, 440) for handling a sample for an autosampler (1), comprising a fastening device (141, 341, 441) for detachably fastening the tool (140, 440) to a tool holder (5, 105, 205, 305) of a sample handling apparatus (5, 105, 205, 305), and comprising a sample manipulation device fastened to the fastening device (141), 341, 441), wherein the tool (140, 440) comprises a holding device (160, 460), which
a) is fastened to the fastening device (141, 341, 441) so as to be movable in a coupling direction and
b) can be coupled to and decoupled from the tool holder (5, 105, 205, 305) in the coupling direction,
**characterized in that**
c) the fastening device (141, 341, 441) being able to be coupled to and decoupled from the tool holder (5, 105, 205, 305) in the coupling direction.

2. Tool (140, 440) according to Claim 1, the holding device (160, 460) comprising a guide element for guiding a needle, a longitudinal axis of the needle being aligned in the coupling direction, and the guide element having an opening that is complete all the way round for guiding the needle.

3. Tool (140, 440) according to either of Claims 1 and 2, the fastening device (141, 341, 441) comprising a first connecting element of a first, positive-fit connecting device, the tool holder (5, 105, 205, 305) comprising a second connecting element of the first connecting device, and the fastening device (141, 341, 441) being able to be coupled to and decoupled from the tool holder (5, 105, 205, 305) in the coupling direction through connecting and undoing, respectively, of the first connecting device, and the first connecting device preferably being realized without play.

4. Tool (140, 440) according to any one of Claims 1 - 3, the holding device (160, 460) comprising a first connecting element and the tool holder (5, 105, 205, 305) comprising a second connecting element of a second positive-fit connecting device, and the holding device (160, 460) being able to be coupled to and decoupled from the tool holder (5, 105, 205, 305) through connecting and undoing, respectively, of the connecting device in the coupling direction.

5. Tool (140, 440) according to any one of Claims 1 - 4, the tool (140, 440) comprising an element that is movable in the coupling direction, the movable element comprising a first connecting element and the tool holder (5, 105, 205, 305) comprising a second connecting element of a third positive-fit connecting device, the moveable element being able to be coupled to and decoupled from the tool holder (5, 105, 205, 305) in the coupling direction, and the third connecting device preferably being realized without play.

6. Tool (140, 440) according to Claim 5, the sample manipulation device comprising a syringe (150, 450) that has a cylindrical hollow body fastened to the fastening device (141, 341, 441) and has a piston that is movable in the hollow body and constitutes the movable element, and comprising a cannula that is fastened to the syringe (150, 450) and comprises the needle.

7. Tool (140, 440) according to any one of Claims 1 - 6, the tool (140, 440) comprising a communication interface for establishing a communication connection between the tool (140, 440) and the sample handling apparatus (5, 105, 205, 305), and this communication connection preferably comprising at least one electrical contact for the purpose of establishing at least one electrically conductive connection between the tool (140, 440) and the sample handling apparatus (5, 105, 205, 305).

8. Tool (140, 440) according to Claim 7, the tool (140, 440) comprising a memory in which there can be stored tool-specific data that can be transmitted directly to the sample handling apparatus (5, 105, 205, 305) via the communication interface.

9. Tool (140, 440) according to either one of Claims 7 and 8, having an additional interface for establishing at least one communication connection between the tool (140, 440) and a parking station of the sample handling apparatus (5, 105, 205, 305) that is realized for storing a decoupled tool (140, 440).

10. Tool (140, 440) according to any one of Claims 1 - 9, having a fluid interface for establishing at least one fluid connection between the tool (140, 440) and the sample handling apparatus (5, 105, 205, 305).

11. Tool holder (5, 105, 205, 305) that is movable in a z direction (8) and that comprises first fastening means for detachably fastening a fastening device (141, 341, 441) of a tool (140, 440) according to any one of Claims 1 - 10, **characterized in that** the tool holder (5, 105, 205, 305) comprises second fastening means for detachably fastening a holding device (160, 460) of the tool (140, 440), the first and second fastening means being movable relative to one another in the z direction (8), and the tool holder (5, 105, 205, 305) preferably having a drive for this purpose, for example an electric motor such as, for instance, a stepping motor.

12. Tool holder (5, 105, 205, 305) according to Claim 11, the tool holder (5, 105, 205, 305) comprising third fastening means for detachably fastening a movable element of a sample manipulation device of the tool (140, 440), the first and third fastening means being movable relative to one another in the z direction (8).

13. Sample handling apparatus (5, 105, 205, 305), having a tool holder (5, 105, 205, 305), according to either one of Claims 11 and 12, that is fastenable to the sample handling apparatus (5, 105, 205, 305) so as to be movable in a z direction (8).

14. Sample handling arrangement, comprising a sample handling apparatus (5, 105, 205, 305) according to Claim 13 having a tool holder (5, 105, 205, 305) according to either one of Claims 11 and 12 and at least one tool (140, 440), according to any one of Claims 1 - 10, that is fastened or fastenable to the tool holder (5, 105, 205, 305), the sample handling arrangement preferably comprising two or more such tools (140, 440).

15. Method for coupling and decoupling a tool (140, 440) according to any one of Claims 1 - 10 to and from, respectively, a tool holder (5, 105, 205, 305) of a sample handling apparatus (5, 105, 205, 305) according to any one of Claims 11 - 13, **characterized in that**, following an appropriate mutual positioning and alignment of the tool (140, 440) and of the tool holder (5, 105, 205, 305), the tool is coupled to and decoupled from the tool holder (5, 105, 205, 305) exclusively through relative movements of the tool holder (5, 105, 205, 305), the first and second fastening means, the fastening device (141, 341, 441) and/or the holding device (160, 460) in the z direction (8).

16. Method according to Claim 15, a movable element of a sample manipulation device being coupled to and decoupled from the tool holder (5, 105, 205, 305) simultaneously through the relative movements.

## Revendications

1. Outil (140, 440) de manipulation d'un échantillon pour un échantillonneur automatique (1) avec un dispositif de fixation (141, 341, 441) pour la fixation détachable à un porte-outil (5, 105, 205, 305) d'un système de manipulation d'échantillon et avec un dispositif de manipulation d'échantillon fixé au dispositif de fixation, dans lequel l'outil (140, 440) comprend un dispositif de maintien (160, 460), qui
a) est fixé au dispositif de fixation de façon déplaçable dans une direction de couplage, et
b) peut être couplé au porte-outil ou découplé de celui-ci dans la direction de couplage,
**caractérisé en ce que**
c) le dispositif de fixation peut être couplé au porte-outil ou découplé de celui-ci dans la direction de couplage.

2. Outil (140, 440) selon la revendication 1, dans lequel le dispositif de maintien (160, 460) comprend un élément de guidage (466) pour le guidage d'une canule du dispositif de manipulation d'échantillon, dans lequel un axe longitudinal de la canule est orienté dans la direction de couplage et l'élément de guidage présente une ouverture fermée tout autour pour le guidage de la canule.

3. Outil (140, 440) selon une des revendications 1 ou 2, dans lequel le dispositif de fixation (141, 341, 441) comprend un premier élément de liaison d'un premier dispositif de liaison par emboîtement, dans lequel le porte-outil (5, 105, 205, 305) comprend un deuxième élément de liaison du premier dispositif de liaison et le dispositif de fixation (141, 341, 441) peut être couplé au porte-outil (5, 105, 205, 305) ou découplé de celui-ci par liaison ou séparation du premier dispositif de liaison dans la direction de couplage et le dispositif de liaison est de préférence réalisé sans jeu.

4. Outil (140, 440) selon l'une quelconque des revendications 1 à 3, dans lequel le dispositif de maintien (160, 460) comprend un premier et le porte-outil (5, 105, 205, 305) comprend un deuxième élément de liaison d'un deuxième dispositif de liaison par emboîtement et le dispositif de maintien (160, 460) peut être couplé au porte-outil (5, 105, 205, 305) ou découplé de celui-ci par liaison ou séparation du dispositif de liaison dans la direction de couplage.

5. Outil (140, 440) selon l'une quelconque des revendications 1 à 4, dans lequel l'outil (140, 440) comprend un élément mobile dans la direction de couplage, l'élément mobile comprend un premier et le porte-outil (5, 105, 205, 305) comprend un deuxième élément de liaison d'un troisième dispositif de liaison par emboîtement, l'élément mobile peut être couplé au porte-outil (5, 105, 205, 305) ou découplé de celui-ci dans la direction de couplage et le troisième dispositif de liaison est de préférence réalisé sans jeu.

6. Outil (140, 440) selon la revendication 5, dans lequel le dispositif de manipulation d'échantillon comprend une seringue (150, 450) avec un corps creux cylindrique fixé au dispositif de fixation (141, 341, 441) et avec un piston déplaçable dans le corps creux et formant l'élément mobile, ainsi que la canule fixée à la seringue (150, 450).

7. Outil (140, 440) selon l'une quelconque des revendications 1 à 6, dans lequel il comprend une interface de communication pour établir une liaison de communication entre l'outil (140, 440) et le système de manipulation d'échantillon (1) et cette liaison de communication comprend au moins un contact électrique pour la création d'au moins une liaison électriquement conductrice entre l'outil (140, 440) et le système de manipulation d'échantillon (1).

8. Outil (140, 440) selon à revendication 7, dans lequel l'outil (140, 440) comprend une mémoire, dans laquelle des données spécifiques de l'outil peuvent être stockées, qui peuvent être transmises au système de manipulation d'échantillon (1) via l'interface de communication.

9. Outil (140, 440) selon l'une des revendications 7 ou 8 avec une interface supplémentaire pour établir au moins une liaison de communication entre l'outil (140, 440) et une station de parcage (499) du système de manipulation d'échantillon (1) destinée à conserver un outil (140, 440) découplé.

10. Outil (140, 440) selon l'une quelconque des revendications 1 à 9 avec une interface de fluide pour établir au moins une liaison de fluide entre l'outil (140, 440) et le système de manipulation d'échantillon (1).

11. Porte-outil (5, 105, 205, 305), qui peut être fixé à un système de manipulation d'échantillon (1) de façon déplaçable dans une direction z (8) et qui comprend des premiers moyens de fixation pour la fixation détachable d'un dispositif de fixation (141, 341, 441) d'un outil (140, 440) selon l'une quelconque des revendications 1 à 10, **caractérisé en ce que** le porte-outil (5, 105, 205, 305) comprend des deuxièmes moyens de fixation pour la fixation détachable d'un dispositif de maintien (160, 460) de l'outil (140, 440), dans lequel les premiers et les deuxièmes moyens de fixation sont déplaçables les uns par rapport aux autres dans la direction z (8) et le porte-outil (5, 105, 205, 305) comprend à cet effet de préférence un entraînement, par exemple un moteur électrique comme par exemple un moteur pas à pas.

12. Porte-outil (5, 105, 205, 305) selon la revendication 11, dans lequel il comprend des troisièmes moyens de fixation pour la fixation détachable d'un élément mobile d'un dispositif de manipulation d'échantillon de l'outil (140, 440), dans lequel les premiers et les troisièmes moyens de fixation sont déplaçables les uns par rapport aux autres dans la direction z (8).

13. Système de manipulation d'échantillon (1) avec un porte-outil (5, 105, 205, 305) selon l'une des revendications 11 ou 12 pouvant être fixé au système de manipulation d'échantillon (1) de façon déplaçable dans la direction z (8).

14. Installation de manipulation d'échantillon, comprenant un système de manipulation d'échantillon (1) selon la revendication 13 avec un porte-outil (5, 105, 205, 305) selon l'une des revendications 11 ou 12 et avec au moins un outil (140, 440) selon l'une quelconque des revendications 1 à 10, qui est (ou qui peut être) fixé au porte-outil (5, 105, 205, 305), dans laquelle l'installation de manipulation d'échantillon comprend de préférence deux ou plus de ces outils (140, 440).

15. Procédé pour coupler ou découpler un outil (140, 440) selon l'une quelconque des revendications 1 à 10 à un ou d'un porte-outil (5, 105, 205, 305) d'un système de manipulation d'échantillon (1) selon l'une quelconque des revendications 11 à 13, **caractérisé en ce que**, après une mise en place et une orientation mutuelle convenable de l'outil (140, 440) et du porte-outil (5, 105, 205, 305), l'outil (140, 440) est couplé au porte-outil (5, 105, 205, 305) ou découplé de celui-ci exclusivement par des mouvements relatifs mutuels du porte-outil (5, 105, 205, 305), des premiers et des deuxièmes moyens de fixation, du dispositif de fixation (141, 341, 441) et/ou du dispositif de maintien (160, 460) dans la direction z.

16. Procédé selon la revendication 15, dans lequel un élément mobile d'un dispositif de manipulation d'échantillon est couplé au porte-outil (5, 105, 205, 305) ou découplé de celui-ci simultanément par les mouvements relatifs mutuels.
